# EUROPÄISCHE PATENTSCHRIFT

(11) **EP 0 158 233 B1**
(45) Veröffentlichungstag und Bekanntmachung des Hinweises auf die Patenterteilung: **13.12.1989**
(21) Anmeldenummer: 85103727.5
(22) Anmeldetag: 28.03.1985
(51) Int. Cl.: C09B 67/54, C09B 67/26, C09B 67/34, C09B 62/00, C07B 63/00

(54) **Verfahren zur Herstellung flüssiger, salzarmer, wässriger Farbstoffzubereitungen**
Process for the manufacture of liquid, aqueous dyestuff preparations with a low salt content
Procédé de fabrication de préparations tinctoriales liquides aqueuses et à faible teneur en sel

(30) Priorität: 09.04.1984 DE 3413315; 21.07.1984 DE 3426931
(43) Veröffentlichungstag der Anmeldung: 16.10.1985
(73) Patentinhaber: HOECHST AKTIENGESELLSCHAFT, 65926 Frankfurt am Main (DE)
(72) Erfinder: Opitz, Konrad, Dr., D-6237 Liederbach (DE); Schwaiger, Günther, Dr., D-6230 Frankfurt am Main 80 (DE); Pohlmann, Heinrich, Dr., D-6233 Kelkheim (Taunus) (DE); Sittig, Manfred, D-6239 Kriftel (DE); Fabel, Christian, D-6233 Kelkheim (Taunus) (DE); Wilhelm, Siegfried, D-6230 Frankfurt am Main 80 (DE); Mitter, Franz, D-6239 Kriftel (DE)

(56) Entgegenhaltungen:
- EP-A- 0 100 043
- CH-A- 620 198
- GB-A- 1 480 697
- GB-A- 2 079 771
- DERWENT ACCESSION NO. 79-84 903 B (47), Questel Telesystemes(WPIL), DERWENT PUBLICATIONS LTD., LONDON

## Beschreibung

Zum Färben und Bedrucken von stickstoffhaltigen Fasermaterialien, wie Wolle, Seide oder synthetischen Polyamidfasern, und vor allem von Fasermaterialien aus natürlicher oder regenerierter Cellulose sowie von diesen Fasern enthaltenden Mischgeweben werden in großem Umfang Reaktivfarbstoffe verwendet, die in Form trockener und nichtfärbende Stellmittel enthaltender Pulver eingesetzt werden. Außer durch die unangenehme, auf der Pulverform beruhenden Staubentwicklung wird das Ansetzen von Druckpasten sowie von Klotz- und Färbeflotten mit solchen Farbstoffpulvern vor allem dadurch erschwert, daß viele der Farbstoffpulver wegen des Gehalts an mineralölhaltigen Entstaubungsmitteln, die auch zu öligen Abscheidungen führen können, schlecht benetzen und deshalb zur Klumpenbildung neigen oder zu wenig löslich sind.

Diese Nachteile von Farbstoffpulvern machen sich bei denjenigen Färbeverfahren besonders unangenehm bemerkbar, bei denen es darauf ankommt, hohe Farbstoffkonzentrationen bei niedrigen Temperaturen zu erreichen, so z. B. beim Klotz-Kurzverweil-Verfahren. Hier sind flüssige Färbepräparationen erwünscht, die den pulverförmigen deutlich überlegen sind. Für wenig gut wasserlösliche Reaktivfarbstoffe werden Lösevermittler oder Kombinationen von Lösevermittlern mit anionischen Dispergiermitteln eingesetzt, um zu handelsfähigen flüssigen Präparationen zu gelangen (s. bspw. die britische Patentschrift Nr. 1 060 063, die deutsche Offenlegungsschrift Nr. 2 529 658 und die US-PS-4 443 224). Von praktischem Interesse sind aber insbesondere flüssige Färbepräparationen mit Wasser als alleinigem Lösemittel und mit hohen Farbstoffgehalten ; diese lassen sich allerdings nur mit gut wasserlöslichen Reaktivfarbstoffen herstellen. Solche Präparationen sind beispielsweise aus den U.S.-Patentschriften Nrs. 4 072 463, 4 078 884 und 4149850 bekannt. Hohe Salzgehalte sind jedoch unerwünscht, da sie die Löslichkeit des Farbstoffes verringern können oder Ausfällungen der Sulfatsalze als Natriumsulfat- dekahydrat bei niedrigen Lagertemperaturen auftreten können, die bei Raumtemperatur zu langsam reversibel sind.

Es gibt nun eine Reihe von Reaktivfarbstoffen, die in reiner, salzarmer Form eine ausreichend hohe Wasserlöslichkeit aufweisen, von denen aber wegen eines zu hohen, synthesebedingten Salzgehaltes entweder handelsfähige flüssige rein wäßrige Präparationen überhaupt nicht herstellbar sind oder, wenn sich bei Raumtemperatur oder erhöhter Temperatur flüssige rein wäßrige Präparationen herstellen lassen, diese nicht kaltlagerstabil sind.

Man hat sich nun bemüht, die unerwünschten hohen Salzgehalte zu reduzieren. Solche Verfahren sind in der Literatur beschrieben, sind jedoch mit nicht zu unterschätzenden Nachteilen verbunden. Beispielsweise werden die von Sulfierungen, Sulfatisierungen (Veresterung) und Diazotierungen herrührenden Überschüsse an Schwefelsäure mit Calciumcarbonat neutralisiert und als schwerlösliches Calciumsulfat (Gips) abgetrennt. Nachteilig ist hieran, daß der Gipsrückstand einer Deponie zugeführt werden und zudem zuvor sorgfältig gewaschen werden muß, um u. a. Farbstoffverluste zu vermeiden, weswegen eine stark verdünnte Farbstofflösung, die zur Aufkonzentrierung oder Trocknung einen entsprechend hohen Energieaufwand erfordert, anfällt.

Eine grundsätzlich andere Methode zur Entfernung unerwünschter und störender Salze stellen die beispielsweise in der britischen Patentschrift Nr. 1 359 898 oder in der deutschen Offenlegungsschrift Nr. 2 948 292 beschriebenen Membrantrennverfahren dar. Sie besitzen ebenfalls beträchtliche Nachteile. Es werden zusätzliche teure Apparaturen benötigt, und es gelingt in der Praxis nur, Chloride zu entfernen, während Sulfate durch Membrantrennverfahren von Reaktivfarbstoffen praktisch nicht abtrennbar sind, weil das für eine erfolgreiche Trennung von Salz und Farbstoff erforderliche Molekulargewichtsverhältnis von 1:10 zwischen Sulfatanion und Farbstoffanion bei weitem nicht erreicht wird. Zudem geht in dieses Verhältnis das effektive Molekulargewicht des hydratisierten Sulfations ein, so daß bei der Annahme, daß dessen Hydrathülle lediglich 5 Moleküle H₂0 enthält, nur Farbstoffe mit einem Molekulargewicht von größer als 2 000 durch Membrantrennverfahren von Sulfationen zu befreien wären. Die Molekulargewichte der meisten Reaktivfarbstoffe liegen jedoch im Bereich zwischen 300 und 1 000 und nur in Ausnahmefällen darüber. Verwendet man trotzdem sulfationendurchlässige Membranen, muß man hohe Farbstoffverluste in Kauf nehmen. Einen weiteren Nachteil der Membrantrennverfahren stellen die zwangsläufig anfallenden salzhaltigen Abwässer dar.

So ist ein Verfahren zur Abtrennung von Natriumsulfat aus Lösungen von Säurefarbstoffen der Azoreihe aus der britischen Patentanmeldungs-Veröffentlichung Nr. 2 079 771 bekannt, bei welchem das Natriumsulfat durch Zusatz von mit Wasser mischbaren organischen Verbindungen, die in der Regel als Lösemittel dienen, abgeschieden wird. Als solche Verbindungen werden Monoethylenglykol, dessen Methyl- und Ethylether sowie Ethanolamine genannt. Diese « Lösemittel » können jedoch außer der Löslichkeit des Natriumsulfats auch die Löslichkeit der Farbstoffe herabsetzen, was natürlich unerwünscht ist ; für faserreaktive Farbstoffe können sie keinesfalls eingesetzt werden, da sie mit den faserreaktiven Gruppen, spätestens bei der Applikation und Fixierung der faserreaktiven Farbstoffe auf der Faser, unter Verminderung der Farbausbeute reagieren.

Es bestand somit die Aufgabe, unter Vermeidung der Nachteile der bisher bekannten Verfahren der Entfernung von Elektrolytsalzen, wie insbesondere Natriumsulfat, eine Möglichkeit aufzufinden, zu wäßrigen Lösungen von faserreaktiven Farbstoffen zu gelangen, die eine möglichst hohe Konzentration an Farbstoff aufweisen und weitgehend frei von Elektrolytsalzen, wie Alkalichloriden und insbesondere Alkalisulfaten, sind sowie sich sehr gut als flüssige Färbepräparationen mit guter Lagerstabilität eignen.

Mit der vorliegenden Erfindung wurde diese Aufgabe gelöst. Gegenstand der vorliegenden Erfindung ist deshalb ein unweltfreundliches und wirtschaftliches Verfahren zur Herstellung flüssiger, sulfatarmer wäßriger Färbepräparationen von anionischen oder von _{'}kationischen, wasserlöslichen Farbstoffen, insbesondere von Reaktivfarbstoffen der nachstehend genannten und definierten allgemeinen Formel (1) 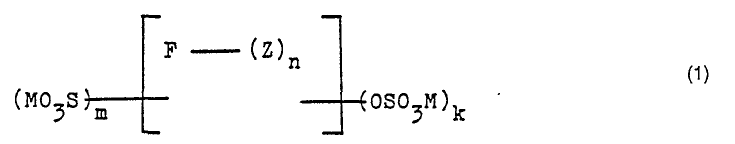 das zusätzliche aufwendige Apparaturen nicht erfordert und bei welchem das abgetrennte Sulfat nicht in nachteiliger Weise als Abfallstoff auftritt. Das erfindungsgemäße Verfahren ist dadurch gekennzeichnet, daß man eine natriumsulfathaltige wäßrige Lösung eines oder mehrerer anionischer oder kationischer Farbstoffe, vorzugsweise eines oder mehrerer Reaktivfarbstoffe der allgemeinen Formel (1), die weniger als 2Gew.-%, vorzugsweise weniger als 1 Gew.-% Chlorid (berechnet auf Chloridionen) enthält, auf eine Temperatur zwischen + 5 °C und -15°C, vorzugsweise zwischen + 3 °C und -10°C, abgekühlt und das abgeschiedene Natriumsulfatdekahydrat (Glaubersalz), beispielsweise durch Filtration oder Abzentrifugieren, abtrennt.

In der Formel (1) bedeuten :
F ist der Rest eines Farbstoffchromophors eines Anthrachinonfarbstoffes, eines Monoazofarbstoffes, eines Disazofarbstoffes, eines Trisazofarbstoffes oder eines Phthalocyaninfarbstoffes oder eines Kupfer-, Chrom-, Kobalt-, Nickel- oder Eisen-Komplexfarbstoffes eines Mono-, Dis- oder Trisazofarbstoffes oder Phthalocyaninfarbstoffes oder eines Formazan-, Kupferformazan- oder Nickelformazanfarbstoffes ;
M ist ein Wasserstoffatom oder bevorzugt ein Alkalimetall, wie Natrium, Kalium oder Lithium, insbesondere bevorzugt Natrium ;
k ist die Zahl Null, 1, 2, 3 oder 4, vorzugsweise 1, 2 oder 3, und
m ist die Zahl Null, 1, 2, 3 oder 4, vorzugsweise 2, 3 oder 4, wobei die Summe von (k + m) eine Zahl von mindestens 1, vorzugsweise mindestens 2 ist;
n ist die Zahl 1, 2 oder 3 ;
Z ist ein faserreaktiver Monochlortriazinrest, vorzugsweise der nachstehend definierten allgemeinen Formel (2a) 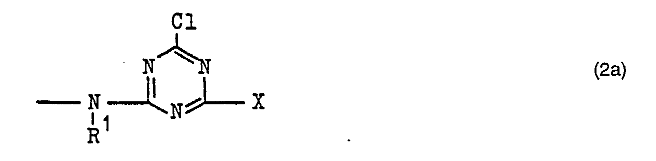 oder eine faserreaktive Gruppe der allgemeinen Formel (2b), (2c), (2d) oder (2e) 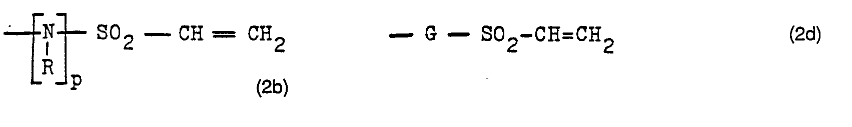 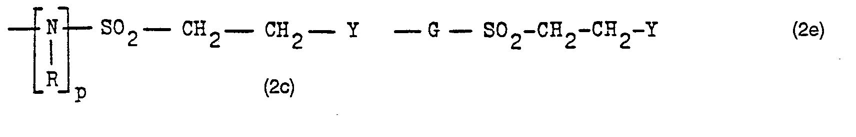 in welcher
G eine Methylen- oder Ethylengruppe bedeutet,
R eine Alkylgruppe von 1 bis 4 C-Atomen, wie eine Ethylgruppe und insbesondere Methylgruppe, ist,
p für die Zahl Null oder 1 steht und
Y die Acetyloxygruppe, eine Phosphatogruppe (entsprechend der allgemeinen Formel -OP0₃M₂ mit M der obengenannten Bedeutung), eine Thiosulfatogruppe (entsprechend der allgemeinen Formel -S-S0₃M mit M der obengenannten Bedeutung) oder eine Sulfatogruppe (entsprechend der allgemeinen Formel -OS0₃M mit M der obengenannten Bedeutung) oder ein Chlor- oder ein Bromatom ist;

die faserreaktiven Gruppen Z können, sofern sie gemäß n gleich 2 oder 3 zwei- oder dreimal an F gebunden sind, zueinander gleiche oder voneinander verschiedene Bedeutungen besitzen ;

die angegebenen Sulfogruppen können sowohl an aromatische und aliphatische C-Atome von F gebunden sein als auch Bestandteil des faserreaktiven Monochlortriazinrestes, wie des der allgemeinen Formel (2a), sein ;

die angegebenen Sulfatogruppen können sowohl an aliphatische C-Atome von F gebunden sein als auch Bestandteil der faserreaktiven Gruppe der Formel (2c) oder (2e) und/oder des faserreaktiven Monochlortriazinrestes, wie des der allgemeinen Formel (2a), sein.

In der obengenannten allgemeinen Formel (2a) bedeuten :
R¹ ist ein Wasserstoffatom oder eine Alkylgruppe von 1 bis 4 C-Atomen, wie eine Methyl- oder Ethylgruppe ;
X ist eine Gruppe der allgemeinen Formel (3a), (3b) oder (3c) 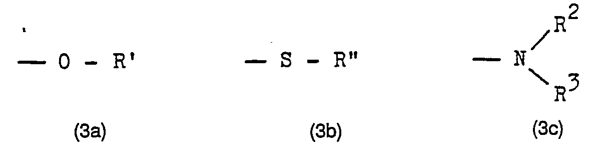 in welchen

R' ein Wasserstoffatom oder eine Alkylgruppe von 1 bis 4 C-Atomen ist oder eine Alkylgruppe von 1 bis 4 C-Atomen bedeutet, die durch eine Alkoxygruppe von 1 bis 4 C-Atomen, eine Sulfo-, Carboxy-, Sulfato- oder Phosphatogruppe oder eine unsubstituierte oder eine durch 1 oder 2 Substituenten aus der Gruppe Methyl, Ethyl, Methoxy, Ethoxy, Chlor, Sulfo und Carboxy substituierte Phenylgruppe substituiert ist,

R" eine Alkylgruppe von 1 bis 4 C-Atomen ist oder eine Alkylgruppe von 1 bis 4 C-Atomen bedeutet, die durch eine Alkoxygruppe von 1 bis 4 C-Atomen, eine Sulfo-, Carboxy-, Sulfato- oder Phosphatogruppe oder eine unsubstituierte oder eine durch 1 oder 2 Substituenten aus der Gruppe Methyl, Ethyl, Methoxy, Ethoxy, Chlor, Sulfo und Carboxy substituierte Phenylgruppe substituiert ist,

R² ein Wasserstoffatom oder eine Alkylgruppe von 1 bis 4 C-Atomen ist, die durch einen oder zwei Substituenten aus der Gruppe Acetylamino, Hydroxy, Sulfato, β-Sulfatoethylsulfonyl, β-Thiosulfatoethylsulfonyl, Alkoxy von 1 bis 4 C-Atomen, Sulfo, Carboxy, Phenyl, Naphthyl, durch Sulfo, Carboxy, β-Sulfatoethylsulfonyl, β-Thiosulfatoethylsulfonyl, Methyl, Ethyl, Methoxy, Ethoxy, Chlor, Sulfamoyl und/oder Carbamoyl substituiertes Phenyl und durch Sulfo, Carboxy, ß-Sulfatoethylsulfonyl, β-Thiosulfatoethylsulfonyl, Sulfamoyl und/oder Carbamoyl substituiertes Naphthyl substituiert sein kann, oder ein Cycloalkylrest von 5 bis 8 C-Atomen ist, der durch 1, 2 oder 3 Methylgruppen und/oder eine Amino- oder AlkylaminoGruppe mit einem Alkylrest von 1 bis 4 C-Atomen substituiert sein kann, und

R³ ein Wasserstoffatom oder eine Alkylgruppe von 1 bis 4 C-Atomen ist, die durch einen oder zwei Substituenten aus der Gruppe Acetylamino, Hydroxy, Sulfato, β-Sulfatoethylsulfonyl, β-Thiosulfatoethylsulfonyl, Alkoxy von 1 bis 4 C-Atomen, Sulfo, Carboxy, Phenyl, Naphthyl, durch Sulfo, Carboxy, β-Sulfatoethylsulfonyl, β-Thiosulfatoethylsulfonyl, Methyl, Ethyl, Methoxy, Ethoxy, Chlor, Sulfamoyl und/oder Carbamoyl substituiertes Phenyl und durch Sulfo, Carboxy, Sulfatoethylsulfonyl, β-Thiosulfatoethylsulfonyl, Sulfamoyl und/oder Carbamoyl substituiertes Naphthyl substituiert sein kann, oder eine Phenyl- oder Naphthylgruppe ist oder eine Phenylgruppe bedeutet, die durch 1 oder 2 Substituenten aus der Gruppe Acetylamino, Benzoylamino, Nitro, ß-Sulfatoethylsulfonyl, ß-Thiosulfatoethylsulfonyl, β-Chlorethylsulfonyl, Vinylsulfonyl, Alkoxy von 1 bis 4 C-Atomen, Sulfo, Carboxy, Sulfamoyl und Carbamoyl substituiert ist, oder eine Naphthylgruppe ist, die durch 1, 2 oder 3 Sulfogruppen oder durch 1 oder 2 Sulfogruppen und eine Vinylsulfonyl-, β-Sulfatoethylsulfonyl-, β-Thiosulfatoethylsulfonyl- oder ß-Chlorethylsulfonyl-Gruppe substituiert ist,

wobei R² und R³ zueinander gleiche oder voneinander verschiedene Bedeutungen besitzen können, oder worin

R² und R³ zusammen mit dem Stickstoffatom den Rest eines aus einem, zwei oder drei Alkylenresten von 1 bis 5 C-Atomen und gegebenenfalls einem oder zwei Heteroatomen, wie einem Sauerstoff-, Stickstoff- oder Schwefelatom, bestehenden 5- bis 8-gliedrigen heterocyclischen Ring, wie beispielsweise einen Piperazino, Piperidino- oder Morpholinoring, bilden.

Vorzugsweise ist R', R", R² und R³, zueinander gleich oder voneinander verschieden, jedes eine Alkylgruppe von 1 bis 4 C-Atomen, der durch eine Hydroxy-, Acetyloxy- oder Sulfato-Gruppe substituiert sein kann, oder ein Phenylrest, der durch 1 oder 2 Substituenten aus der Gruppe ß-Sulfatoethylsulfonyl, Sulfo und Carboxy substituiert sein kann.

Bevorzugte Farbstoffe aus der Reihe von Farbstoffen der allgemeinen Formel (1) sind die der allgemeinen Formeln (1a), (1b), (1c), (1d), (1e) und (1f) 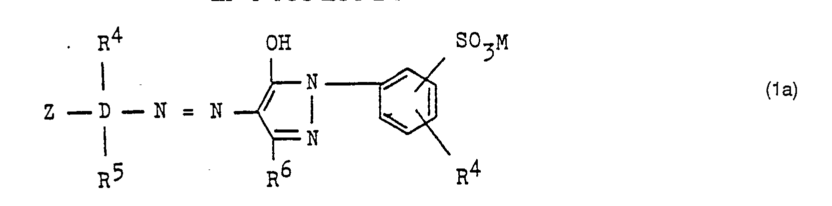 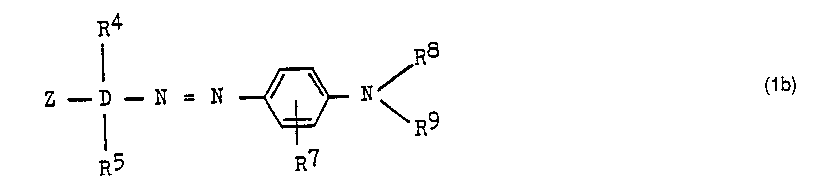 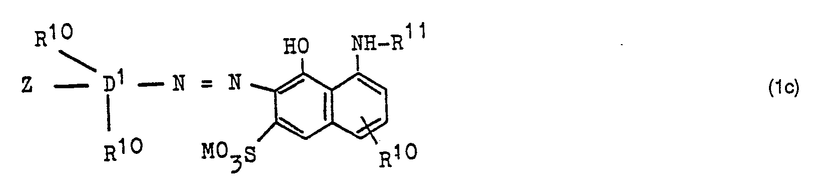 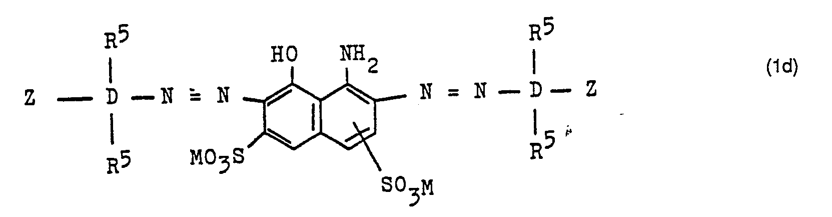 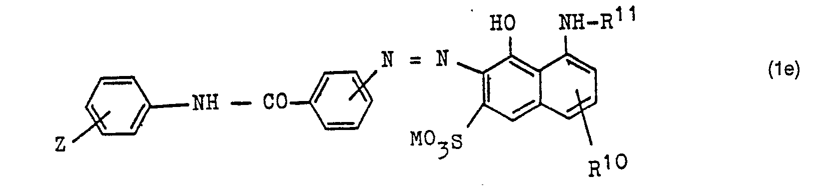 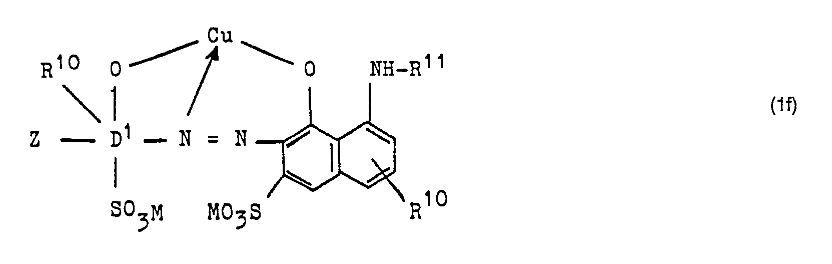 in welchen bedeuten :

Z hat die obengenannte Bedeutung und ist insbesondere eine faserreaktive Gruppe der allgemeinen Formel (2b), in welcher p für die Zahl Null steht, und insbesondere bevorzugt eine Gruppe der allgemeinen Formel (2c), in welcher p für die Zahl Null steht und in welcher Y die obengenannte Bedeutung besitzt, insbesondere bevorzugt die Sulfatogruppe ist ;
M hat die obengenannte Bedeutung ;
D ist ein Benzolring ;

R⁴ ist ein Wasserstoffatom oder eine Alkylgruppe von 1 bis 4 C-Atomen, wie insbesondere die Methylgruppe, oder eine Alkoxygruppe von 1 bis 4 C-Atomen, wie die Ethoxygruppe und insbesondere die Methoxygruppe, ein Chloratom, eine Sulfogruppe (entsprechend der allgemeinen Formel ―S0₃M mit der M der obengenannten Bedeutung) oder eine Carboxygruppe (entsprechend der allgemeinen Formel -COOM mit M der obengenannten Bedeutung) ;

R⁵ ist ein Wasserstoffatom oder eine Alkylgruppe von 1 bis 4 C-Atomen, wie insbesondere die Methylgruppe, oder eine Alkoxygruppe von 1 bis 4 C-Atomen ;

R⁶ ist eine Carbalkoxygruppe von 2 bis 5 C-Atomen, wie die Carbomethoxy- oder Carbethoxygruppe, oder bevorzugt eine Methyl- oder Carboxygruppe ;

R⁷ ist ein Chloratom, die Methylgruppe, die Acetylamino- oder die Ureidogruppe ;

R⁸ ist ein Wasserstoffatom oder eine Alkylgruppe von 1 bis 4 C-Atomen, bevorzugt hiervon die Ethylgruppe, die durch eine Sulfato-, Sulfo-, Carboxy-, Monosulfophenyl- oder Disulfophenyl-Gruppe substituiert sein kann ;

R⁹ ist eine Alkylgruppe von 1 bis 4 C-Atomen, hiervon bevorzugt die Ethylgruppe, die durch eine Sulfato-, Sulfo-, Carboxy-, Monosulfophenyl- oder Disulfophenyl-Gruppe substituiert ist;
D¹ ist ein Naphthalinring ;
R¹⁰ ist ein Wasserstoffatom oder eine Sulfogruppe ;
R" ist eine Acetylgruppe oder eine Benzoylgruppe ;
R¹² ist ein Wasserstoffatom, ein Chloratom, eine Methyl-, Methoxy- oder Ethoxygruppe ;

die in den Formeln befindlichen Formelreste gleicher Bezeichnung können zueinander gleiche oder voneinander verschiedene Bedeutungen haben, und ebenso können die einzelnen Formelreste zueinander gleiche oder voneinander verschiedene Bedeutungen besitzen,

desweiteren die Kupferformazan-Farbstoffe entsprechend der allgemeinen Formel (1g) 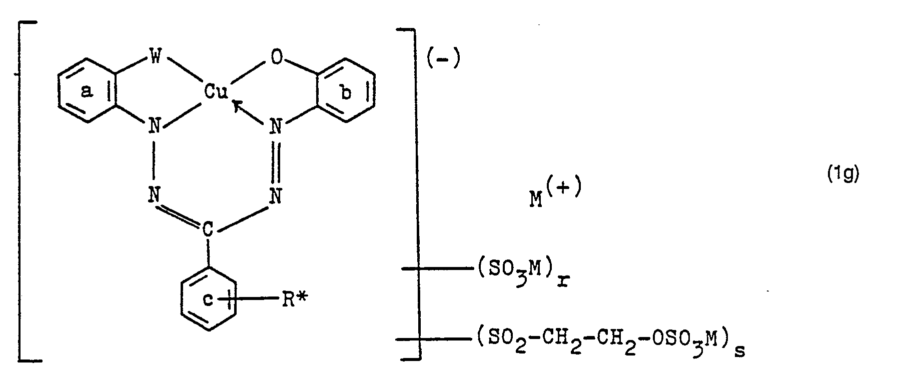 in welcher
M die obengenannte Bedeutung besitzt,
r die Zahl 1, 2 oder 3 bedeutet,
s für die Zahl 1 oder 2 steht,
R^{*} für Wasserstoff, Chlor, Methyl, Ethyl, Methoxy, Ethoxy oder Carboxy steht,
W die Gruppe ―O― oder -COO- bedeutet

und die Sulfogruppe(n) an die Benzolkerne a, b und/oder c und die β-Sulfatoethylsulfonyl-Gruppe(n) an die Benzolkerne a und/oder b gebunden sind, hiervon bevorzugt Farbstoffe entsprechend der allgemeinen Formel (1 h) 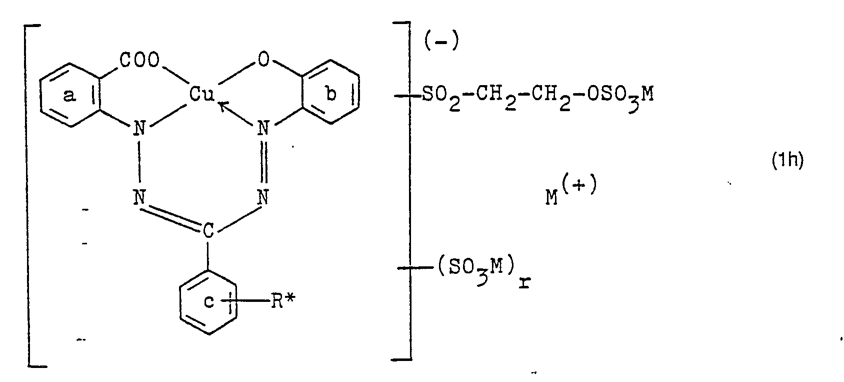 in welcher M, r und R^{*} die obengenannten Bedeutungen haben und die Sulfogruppe(n) an die Benzolkerne a, b und/oder c gebunden sind, wobei jeder dieser Benzolkerne nicht mehr als eine Sulfogruppe besitzt, und insbesondere die Kupferformazanfarbstoffe der allgemeinen Formel (1j) 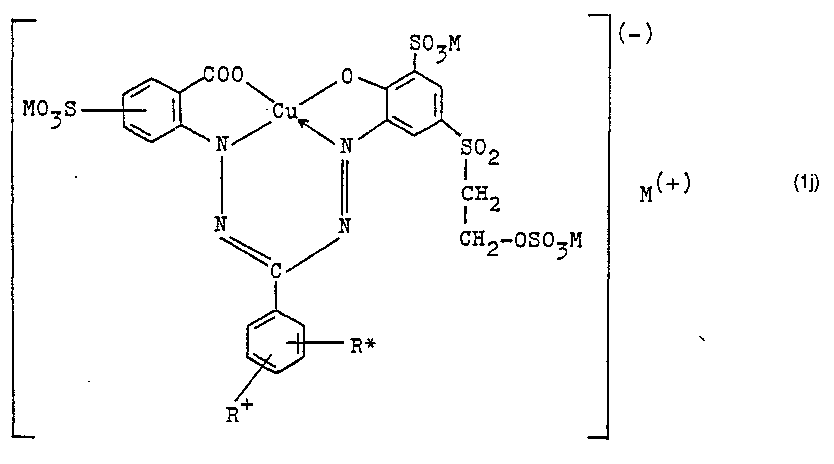 in welcher M und R^{*} die obengenannten Bedeutungen haben und R⁺ für ein Wasserstoffatom oder eine Sulfogruppe steht, R und R⁺ jedoch beide bevorzugt ein Wasserstoffatom bedeuten.

Das erfindungsgemäße Verfahren ermöglicht es, ausgehend von wäßrigen Lösungen der genannten Farbstoffe, insbesondere von Farbstoffen der allgemeinen Formel (1), sulfatarme, aufkonzentrierte wäßrige Lösungen der genannten Farbstoffe, insbesondere der allgemeine Formel (1), mit einem Gehalt an Natriumsulfat (NapS0₄) von unter 5Gew.-%, vorzugsweise unter 4Gew.-%, insbesondere von höchstens 3 Gew.-%, herzustellen.

Als Ausgangslösungen der Farbstoffe, insbesondere von faserreaktiven Farbstoffen der allgemeinen Formel (1), die natriumsulfathaltig sind und die gemäß dem erfindungsgemäßen Verfahren von wesentlichen Teilen des Natriumsulfats befreit werden sollen und hierbei wegen der Mitnahme von Kristallwasser im Natriumsulfat (Glaubersalz) gleichzeitig aufkonzentriert werden, dienen die nach den üblichen Herstellungsverfahren erhältlichen Syntheselösungen dieser Farbstoffe. Bevorzugt wird bei der Synthese mit Schwefelsäure als Säure bei den einzelnen Reaktionsschritten, insbesondere bei der Diazotierungsreaktion, gearbeitet, um das Einbringen von Chloridionen zu vermeiden. Denn ein erhöhter Gehalt an Chloridionen von über 2 Gew.-% bringt Schwierigkeiten bei der Abscheidung des Natriumsulfat-dekahydrats ; er verhindert die leichte Auskristallisation des Glaubersalzes. Als Ausgangslösungen können auch solche Syntheselösungen verwendet werden, die anfangs einen höheren Chloridgehalt besaßen und aus denen zuvor das Chlorid, bspw. durch eines der obengenannten Membrantrennverfahren, bis unter 1 Gew.-% entfernt wurde.

Die Ausgangslösungen (Syntheselösungen) besitzen in der Regel einen pH-Wert zwischen 3 und 7 und können Puffersubstanzen, wie beispielsweise Natriumdihydrogenphosphat, Dinatriumhydrogenphosphat, Natriumoxalat, Natriumacetat oder Natriumborat, die einen pH-Wert von 3 bis 7 einzustellen und zu halten vermögen, enthalten, des weiteren andere Hilfsmittel, bspw. Entschäumer, und/oder äußerst geringe Mengen aus der Synthese eingebrachter inerter Stoffe.

Den erfindungsgemäß erhältlichen sulfatarmen Lösungen der Farbstoffe, wie der der allgemeinen Formel (1), können die Puffersubstanzen, die einen pH-Wert von 3 bis 7 einzustellen und zu halten vermögen, auch nachträglich zugesetzt werden, was bevorzugt ist, des weiteren die für konzentrierte Flüssigpräparationen üblichen Konservierungsmittel oder auch andere Hilfsmittel, wie anionische oder nichtionogene Netzmittel, Färbereihilfsmittel und gegebenenfalls geringe Mengen an Dispergiermittel.

Die nach dem erfindungsgemäßen Verfahren erhältlichen natriumsulfatarmen wäßrigen Lösungen der Farbstoffe können direkt als Flüssigpräparationen, gegebenenfalls nach Zusatz der obengenannten Puffersubstanzen und anderer Hilfsmittel, der färberischen Verwendung zugeführt werden. Da der Sulfatgehalt dieser konzentrierten Farbstofflösungen bei niedrigen Temperaturen infolge der Herstellungsweise noch an der Obergrenze von dessen Löslichkeit in der Nähe des Nullpunktes liegt, ist es vorteilhaft, diese bei 0 °C an Natriumsulfat konzentrierten bzw. nahezu gesättigten Lösungen nachträglich mit Wasser wiederum in einem gewissen Umfange zu verdünnen um auszuschließen, daß bei Lagerung dieser verfahrensgemäß erhältlichen konzentrierten Lösungen bei sehr niedrigen, wie winterlichen, Temperaturen eine Auskristallisation des Natriumsulfat-dekahydrats erfolgt. Denn die Auskristallisation des Glaubersalzes bei handelsfähigen Flüssigpräparationen führt zu Nachteilen in der Verwendung, da das Natriumsulfat-dekahydrat sich nur bei Erwärmung der Präparation über den Schmelzpunkt des Dekahydrats schnell genug auflöst.

Die vorliegende Erfindung betrifft somit nicht nur wäßrige Farbstofflösungen eines oder mehrerer Farbstoffe der allgemeinen Formel (1) mit einem Gesamtfarbstoffgehalt von 5 bis 45 Gew,-% und einem Gehalt von unter 5 Gew.-% und vorzugsweise unter 4 Gew.-% an Na_{z}S0₄, die nach dem erfindungsgemäßen Verfahren erhältlich sind, sondern auch insbesondere daraus erhältliche vorteilhafte flüssige Färbepräparationen, die 5 bis 40 Gew.-% an dem Farbstoff der allgemeinen Formel (1), unter 4 Gew.-% und vorzugsweise höchstens 3 Gew.-% an Na₂S0₄, 2 Gew.-% oder weniger als 2 Gew.-% und bevorzugt weniger als 1 Gew.-% an Chloridionen und gegebenenfalls eine oder mehrere Puffersubstanzen von insgesamt bis zu 3 Gew.-% enthalten und einen pH-Wert zwischen 3 und 7 besitzen.

Die erfindungsgemäßen flüssigen salzarmen wäßrigen Farbstoffzubereitungen von faserreaktiven Farbstoffen der allgemeinen Formel (1) sind hervorragend lagerstabil und führen auch nach mehrwöchiger Lagerung weder bei Raumtemperatur noch bei Temperaturen bis zu 50 °C oder bei niedrigen Temperaturen, wie Temperaturen von + 5 °C bis -5 °C, zu keinerlei Ausfällungen, - sofern bei den verfahrensgemäß erhältlichen Präparationen der geringe Natriumsulfatgehalt bei den niedrigeren Temperaturen nicht die Löslichkeitsgrenze erreicht ; insbesondere die Löslichkeit des Farbstoffes bleibt hiervon unberührt, ebenso der Farbton und des weiteren die Faserreaktivität des Farbstoffes, so daß keine Farbstärkeverluste auftreten. Die erfindungsgemäßen Flüssigpräparationen können deshalb, wie bereits erwähnt, direkt zur Herstellung von Färbeflotten und Druckpasten eingesetzt werden, mit denen die für diese Farbstoffe üblicherweise färbbaren Materialien, wie insbesondere carbonamid- und/oder hydroxy-gruppenhaltigen Fasermaterialien, gefärbt werden können.

Das nach dem erfindungsgemäßen Verfahren abgetrennte Natriumsulfat-dekahydrat kann noch mit anhaftender Mutterlauge, d. h. ohne vorheriges Nachwaschen, vorteilhaft weiterverwendet werden, und zwar bei der Herstellung von Farbstoffpulvern der Farbstoff der allgemeinen Formel (1), indem man es einer anderen Syntheselösung dieses Farbstoffes zusetzt, die durch Trocknung, beispielsweise Sprühtrocknung, zu einem Pulver verarbeitet wird. Man erhält somit Pulvereinstellungen dieser Farbstoffe mit höherem Natriumsulfatgehalt, die in der Färberei erwünscht sein können und die dem Färber den weiteren Zusatz an Natriumsulfat zu den Färbebädern verringern helfen oder gar ersparen. Mit dem erfindungsgemäßen Verfahren hingegen gelingt es, zu salzarmen, konzentrierten Farbstofflösungen dieser Farbstoffe zu gelangen, die der Färber und Anwender vorteilhaft einsetzen kann, da das Abwiegen von pulverförmigen Substanzen und deren Lösen und Ansetzen in Färbebädern entfällt, und mit denen ein schnelles und leichtes Ansetzen des Färbebades oder der Druckpaste, in der Regel durch Verdünnen mit Wasser oder einer wäßrigen Verdickung, die bereits entsprechende Färbereihilfsmittel enthalten kann, möglich ist. Insbesondere wird bei Kaltfärbeverfahren das sonst erforderliche Heißlösen des Pulverfarbstoffes und das anschließende Abkühlen vermieden.

Die nachstehenden Beispiele dienen zur Erläuterung der Erfindung. Die angegebenen Teile stellen Gewichtsteile dar und die Prozentangaben beziehen sich auf Gewichtsprozente, sofern nicht anders vermerkt.

### Beispiel 1

a) Die bekannte Verbindung der Formel (4) 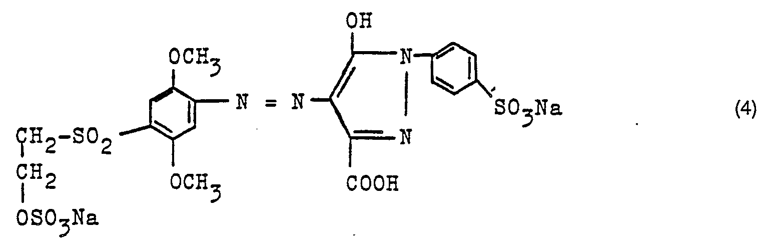 wird nach bekannter Verfahrensweise durch Kupplung von diazotiertem 2,5-Dimethoxy-4-(ß-sulfatoethylsulfonyl)-anilin auf 1-(4-Sulfophenyl)-3-carboxy-pyrazol-5-on hergestellt. Man erhält hierbei eine wäßrige Farbstofflösung, die beispielsweise 15,3 % dieses Farbstoffes, 5,1 % Natriumsulfat und 0,6 % Natriumchlorid enthält.

1 000 Teile solch einer Lösung wurden unter gelegentlichem Rühren auf eine Temperatur von 0 °C abgekühlt und unter gelegentlichem Rühren bei dieser Temperatur 6 Stunden gehalten. Es schieden sich 60 Teile Natriumsulfat-dekahydrat ab, das abfiltriert wurde (dieses kann mit der anhaftenden Mutterlauge, d. h. ohne weiteres Waschen, einem anderen Ansatz mit diesem Farbstoff zugesetzt werden, der durch Trocknung, wie Sprühtrocknung, auf ein festes Farbstoffpulver verarbeitet werden soll).

Es wurden 940 Teile eines Filtrats erhalten, das 16,3 % des Farbstoffes der Formel (4), 0,64 % Natriumchlorid und 2,6 % Natriumsulfat (Na₂S0₄) enthielt und einen pH-Wert von 5,3 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 940 Teile des unter a) erfindungsgemäß erhaltenen Filtrats mit 15 Teilen Natriumdihydrogenphosphat und 65 Teilen Wasser versetzen, um auf diese Weise 1 020 Teile einer flüssigen Färbepräparation zu erhalten, die 15 % des Farbstoffes der Formel (4), 2,4 % . Natriumsulfat (Na₂S0₄) und weniger als 0,6 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, orange Färbungen und Drucke ergeben, die genauso farbstark waren wie diejenigen, die unter entsprechender Verwendung gleichkonzentrierter Färbebäder, Klotzflotten oder Druckpasten mit 1 Teil einer 45 % des Farbstoffes der Formel (4) enthaltenden Pulvereinstellung hergestellt wurden.

d) Stellt man dagegen die 1 000 Teile der oben unter a) eingesetzten Ausgangs-Farbstofflösung direkt mit 20 Teilen Natriumdihydrogenphosphat auf 15 % Farbstoff der Formel (4) ein, so treten bei dieser Präparation bei einer Lagerung bei 0°C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 2

a) Eine wäßrige Syntheselösung eines in üblicher Weise hergestellten Farbstoffes der Formel (5) 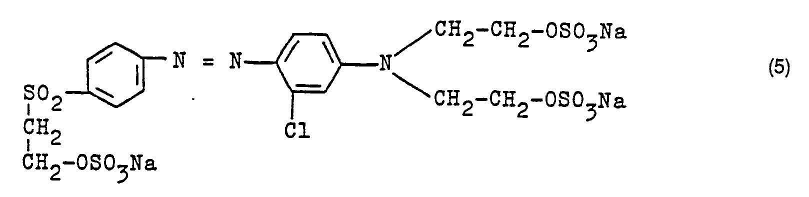 die 10,33 % dieses Farbstoffes, 0,14 % Natriumchlorid und 16,3 % Natriumsulfat enthielt, wurde zur Entfernung von Natriumsulfat dem erfindungsgemäßen Verfahren unterworfen. Hierzu wurden 1 420 Teile dieser Syntheselösung unter langsamem Rühren auf 0 °C abgekühlt ; die Temperatur wurde unter weiterem Rühren 8 Stunden gehalten. Danach wurde das abgeschiedene Natriumsulfatdekahydrat (498 Teile) abfiltriert (das abgeschiedene Dekahydrat kann, - wie im vorhergehenden Beispiel und auch in den nachfolgenden Beispielen, - ohne weiteres Waschen einem anderen Ansatz des jeweiligen Farbstoffes zugesetzt werden, der zur Weiterverarbeitung zu einem festen Farbstoffpulver, bspw. durch Trocknung, wie Sprühtrocknung, vorgesehen ist).

Als Filtrat wurden 922 Teile einer Lösung erhalten, die 15,9 % Farbstoff der Formel (5), 0,22 % Natriumchlorid und 1,24 % Natriumsulfat enthielt und einen pH-Wert von 6,0 besaß. Diese flüssige Präparation ist im geschlossenen Gefäß mindestens 6 Monate bei 5 bis 20 °C und mindestens 6 Wochen bei 40 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 922 Teile des unter a) erfindungsgemäß erhaltenen Filtrats mit 7 Teilen Natriumdihydrogenphosphat, 7 Teilen Dinatriumhydrogenphosphat und 10 Teilen Wasser versetzen, um auf diese Weise 946 Teile einer flüssigen Färbepräparation zu erhalten, die 15,5 % des Farbstoffes der Formel (5), 1,2 % Natriumsulfat (Na₂S0₄) und weniger als 0,22 % Natriumchlorid enthält und einen pH-Wert von 6,2 besitzt.

Diese Flüssigpräparation ist im geschlossenen Gefäß mindestens 6 Monate bei 20 °C und mindestens 6 Wochen bei 50 °C ohne Ausfällung von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, goldgelbe Färbungen und Drucke ergeben, die genauso farbstark waren wie diejenigen, die unter entsprechender Verwendung gleichkonzentrierter Färbebäder, Klotzflotten oder Druckpasten mit 1 Teil einer 62 % des Farbstoffes der Formel (5) enthaltenden Pulvereinstellung hergestellt wurden.

d) Stellt man dagegen die 1 420 Teile der oben unter a) eingesetzten Ausgangs-Farbstofflösung direkt mit 11 Teilen Natriumdihydrogenphosphat, 11 Teilen Dinatriumhydrogenphosphat und 25 Teilen Wasser auf 10 % Farbstoff der Formel (5) ein, so treten bei dieser erheblich farbschwächeren Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 3

a) 1 000 Teile einer wäßrigen Lösung des Farbstoffes der Formel (6) 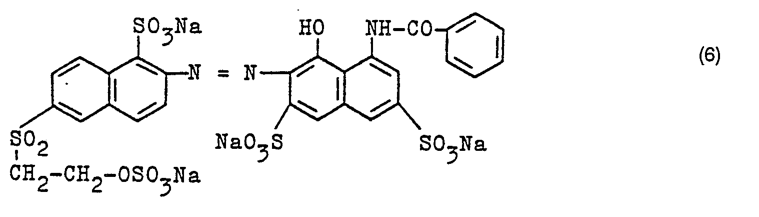 die bei einer üblichen Verfahrensweise zur Synthese dieses Farbstoffes erhalten wurde und die 15,8 % dieses Farbstoffes, 4,6 % Natriumsulfat und 2,1 % Natriumchlorid enthielt, wurden unter gelegentlichem Rühren auf - 3 °C abgekühlt ; diese Temperatur wurde unter gelegentlichem Rühren der Lösung gehalten. Es schieden sich 80 Teile Natriumsulfat-dekahydrat ab, das abfiltriert wurde.

Das erhaltene Filtrat (920 Teile) enthielt 17,2 % des Farbstoffes der Formel (6), 2,3 % Natriumchlorid und 1,2 % Natriumsulfat ; es besaß einen pH-Wert von 5,9. Diese flüssige Präparation ist im geschlossenen Gefäß mindestens 6 Monate bei 5 bis 20 °C und mindestens 6 Wochen bei 50 °C ohne. Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter - 3 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine äußerst natriumsulfatarme, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 920 Teile des unter a) erfindungsgemäß erhaltenen Filtrats mit 20 Teilen Natriumdihydrogenphosphat und 182 Teilen Wasser versetzen, um auf diese Weise 1 122 Teile einer flüssigen Färbepräparation zu erhalten, die 14,1 % des Farbstoffes der Formel (6), 0,98 % Natriumsulfat (Na₂S0₄) und weniger als 2 % Natriumchlorid enthält und einen pH-Wert von 4,8 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, rote Färbungen und Drucke ergeben, die genauso farbstark waren wie diejenigen, die unter entsprechender Verwendung gleichkonzentrierter Färbebäder, Klotzflotten oder Druckpasten mit 1 Teil einer 56,4 % des Farbstoffes der Formel (6) enthaltenden Pulvereinstellung hergestellt wurden.

d) Stellt man dagegen die 1 000 Teile der oben unter a) eingesetzten Ausgangs-Farbstofflösung direkt mit 20 Teilen Natriumdihydrogenphosphat und 102 Teilen Wasser auf 14,1 % Farbstoff der Formel (6) ein, so treten bei dieser Präparation bei einer Lagerung bei 0 °C bereits nach einem Tage starke Abscheidungen an Natriumsulfatdekahydrat auf, und man erhält bei wiederholter Anwendung dieser Präparation Färbungen mit schwankenden Farbstärken, die von dem ursprünglich eingestellten Farbstärkewert abweichen.

### Beispiel 4

a) 1 136 Teile einer wäßrigen Lösung des Farbstoffes der Formel (7) 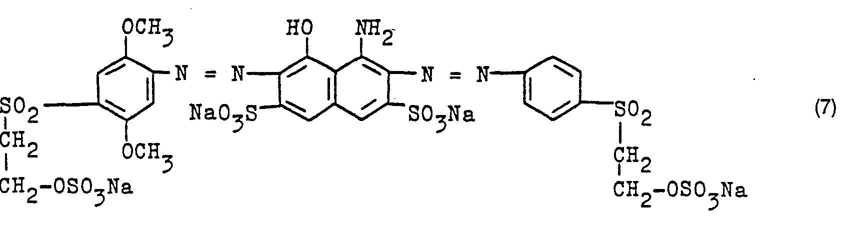 die in einer üblichen Synthese dieses Disazofarbstoffes erhalten wurde und die 17,6 % dieses Farbstoffes, 7 % Natriumsulfat und 0,36 % Natriumchlorid enthielt, wurden unter langsamem Rühren auf - 2 °C abgekühlt und bei dieser Temperatur 7 Stunden langsam weitergerührt. Das abgeschiedene Natriumsulfat-dekahydrat (136 Teile) wurde abfiltriert.

Es wurden 1 000 Teile des Filtrats erhalten, das 20,0 % des Farbstoffes der Formel (7), 0,41 % Natriumchlorid und 1,92 % Natriumsulfat (Na₂S0₄) enthielt und einen pH-Wert von 5,5 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 2°C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0°C oder wenig darunter noch ausreichend lagerstabil ist und nicht zu Ausfällungen von Natriumsulfat-dekahydrat führt.

So kann man beispielsweise die 1 000 Teile des unter a) erfindungsgemäß erhaltenen Filtrats mit 25 Teilen Natriumdihydrogenphosphat und 429 Teilen Wasser versetzen, um auf diese Weise 1 454 Teile einer flüssigen Färbepräparation zu erhalten, die 13,75 % des Farbstoffes der Formel (7), 1,32 % Natriumsulfat (Na₂S0₄) und weniger als 0,3 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, marineblaue Färbungen und Drucke ergeben, die genauso farbstark waren wie diejenigen, die unter entsprechender Verwendung gleichkonzentrierter Färbebäder, Klotzflotten oder Druckpasten mit 1 Teil einer 55 % des Farbstoffes der Formel (7) enthaltenden Pulvereinstellung hergestellt wurden.

d) Stellt man dagegen die 1 136 Teile der oben unter a) eingesetzten Ausgangs-Farbstofflösung direkt mit 25 Teilen Natriumdihydrogenphosphat und 293 Teilen Wasser auf 13,75 % Farbstoff der Formel (7) ein, so treten bei dieser Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 5

a) Es wird in üblicher Weise der Farbstoff der Formel (8) 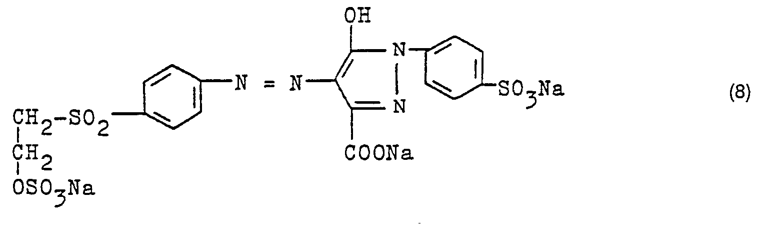 durch Kupplung von diazotierten 4-(ß-Sulfatoethylsulfonyl)-anilin mit 1-(4-Sulfophenyl)-3-carboxy-5-pyrazol-5-on hergestellt. Die erhaltene wäßrige Syntheselösung enthält diesen Farbstoff zu 15,2 %, desweiteren 6,3 % Natriumsulfat und 0,55 % Natriumchlorid.

1 000 Teile dieser Lösung wurden unter gelegentlichem Rühren auf 0 °C abgekühlt und diese Temperatur wurde noch 8 Stunden unter gelegentlichem Rühren gehalten. Die abgeschiedenen 102 Teile Natriumsulfat-dekahydrat wurden danach abfiltriert.

Es wurden 898 Teile des Filtrats erhalten, das 16,9 % des Farbstoffes der Formel (8), 0,61 % Natriumchlorid und 2 % Natriumsulfat (Na₂S0₄) enthielt und einen pH-Wert von 5,3 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 898 Teile des unter a) erfindungsgemäß erhaltenen Filtrats mit 17 Teilen Natriumdihydrogenphosphat und 54 Teilen Wasser versetzen, um auf diese Weise 969 Teile einer flüssigen Färbepräparation zu erhalten, die 15,67 % des Farbstoffes der Formel (8), 1,85 % Natriumsulfat (Na₂S0₄) und 0,57 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeveriuste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, gelbe Färbungen und Drucke ergeben, die genauso farbstark waren wie diejenigen, die unter entsprechender Verwendung gleichkonzentrierter Färbebäder, Klotzflotten oder Druckpasten mit 1 Teil einer 47 % des Farbstoffes der Formel (8) enthaltenden Pulvereinstellung hergestellt wurden.

d) Stellt man dagegen die 1 000 Teile der oben unter a) eingesetzten Ausgangs-Farbstofflösung direkt mit 17 Teilen Natriumdihydrogenphosphat und durch Entfernen von 48 Teilen Wasser, z. B. durch Abdestillieren unter vermindertem Druck, auf 15,67 % Farbstoff der Formel (8) ein, so treten bei dieser Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 6

a) 1 000 Teile einer wäßrigen Lösung des bekannten Farbstoffes der Formel (9) 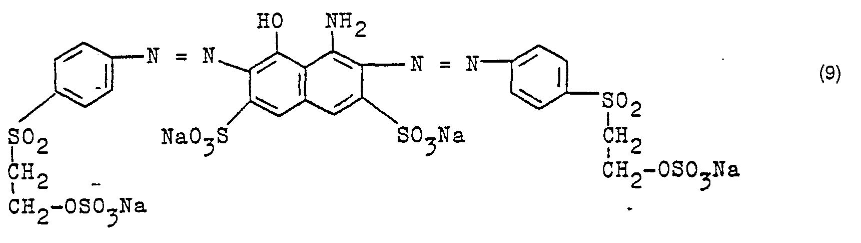 mit einem Farbstoffgehalt von 20,3 % und einem Gehalt von 16,2 % Natriumsulfat und 0,4 % Natriumchlorid werden unter langsamen Rühren auf -2 °C abgekühlt und noch 8 Stunden bei dieser Temperatur langsam weitergerührt. Abgeschiedenes Natriumsulfat (306 Teile) wird abfiltriert.

Es wurden 694 Teile des Filtrats erhalten, das 29,2 % des Farbstoffes der Formel (9), 0,58 % Natriumchlorid und 1,98 % Natriumsulfat (Na₂S0₄) enthielt und einen pH-Wert von 4,7 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine noch natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 694 Teile des unter a) erfindungsgemäß erhaltenen Filtrats mit 10 Teilen Natrium-dihydrogenphosphat und 20 Teilen Wasser versetzen, um auf diese Weise 724 Teile einer flüssigen Färbepräparation zu erhalten, die 28 % des Farbstoffes der Formel (9), 1,9 % Natriumsulfat (Na₂S0₄) und weniger als 0,6 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 2 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, marineblaue bis schwarze Färbungen und Drucke ergeben, die genauso farbstark waren wie diejenigen, die unter entsprechender Verwendung gleichkonzentrierter Färbebäder, Klotzflotten oder Druckpasten mit 1 Teil einer 56 % des Farbstoffes der Formel (9) enthaltenden Pulvereinstellung hergestellt wurden.

d) Stellt man dagegen die 1 000 Teile der oben unter a) eingesetzten Ausgangs-Farbstofflösung direkt mit 10 Teilen Natriumdihydrogenphosphat und durch Entfernen von 286 Teilen Wasser, z. B. durch Abdestillieren und unter vermindertem Druck auf 28 % Farbstoff der Formel (9) ein, so treten bei dieser Präparation bei einer Lagerung bei 0°C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 7

a) Durch Mischkupplung zweier verschiedener Diazokomponenten und einer Kupplungskomponente in üblicher Verfahrensweise kann eine wäßrige Syntheselösung von zwei Monoazofarbstoffen entsprechen der allgemeinen Formel 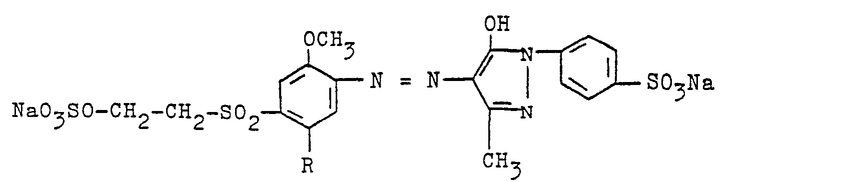
(10) : R = Methyl
(11) : R = Methoxy erhalten werden. Diese beiden Monoazofarbstoffe sind der bekannte Monoazofarbstoff (10) mit R gleich der Methylgruppe und der bekannte Monoazofarbstoff (11) mit R gleich der Methoxygruppe. Eine wäßrige Lösung dieser beiden Farbstoffe kann natürlich auch durch Mischung der getrennt hergestellten Einzelfarbstoffe bzw. deren Syntheselösung erhalten werden.

1 000 Teile einer wäßriger Lösung, die 6 % des Farbstoffes (10) und 10 % des Farbstoffes (11) sowie 0,67 % Natriumchlorid und 8,4 % Natriumsulfat enthielt, wurden unter gelegentlichem Rühren auf eine Temperatur von - 2°C abgekühlt ; diese Temperatur wurde noch 6 Stunden unter gelegentlichem Rühren der Lösung gehalten. Das abgeschiedene Natriumsulfat-dekahydrat (157 Teile) wurde abfiltriert (es kann mit der anhaftenden Mutterlauge, d. h. ohne weiteres Waschen, einem anderen Ansatz mit diesem Farbstoff zugesetzt werden, der durch Trocknung, wie Sprühtrocknung, auf ein festes Farbstoffpulver verarbeitet werden soll).

Es wurden 843 Teile des Filtrats erhalten, das 7,1 % des Farbstoffes (10) und 11,9 % des Farbstoffes (11), 0,8 % Natriumchlorid und 1,8 % Natriumsulfat (Na₂S0₄) enthielt und einen pH-Wert von 4,7 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 843 Teile des unter a) erfindungsgemäß erhaltenen Filtrats mit 15 Teilen Natrium-dihydrogenphosphat und 142 Teilen Wasser versetzen, um auf diese Weise 1 000 Teile einer flüssigen Färbepräparation zu erhalten, die 6 % des Farbstoffes (10) und 10 % des Farbstoffes (11), 1,5 % Natriumsulfat (Na₂S0₄) und weniger als 0,7 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bie 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, gelbe Färbungen und Drucke ergeben, die genauso farbstark waren wie diejenigen, die unter entsprechender Verwendung gleichkonzentrierter Färbebäder, Klotzflotten oder Druckpasten mit 1 Teil einer 24 % des Farbstoffes der Formel (10) und 40 % des Farbstoffes (11) enthaltenden Pulvereinstellung hergestellt wurden.

d) Stellt man dagegen die 1 000 Teile der oben unter a) eingesetzten Ausgangs-Farbstofflösung nur mit 15 Teilen Natriumdihydrogenphosphat auf 5,9 % Farbstoff (10) und 9,85 % Farbstoff (11) ein, so treten bei dieser Präparation bei einer Lagerung bei 0°C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 8

a) Die bekannte Verbindung der Formel (12) 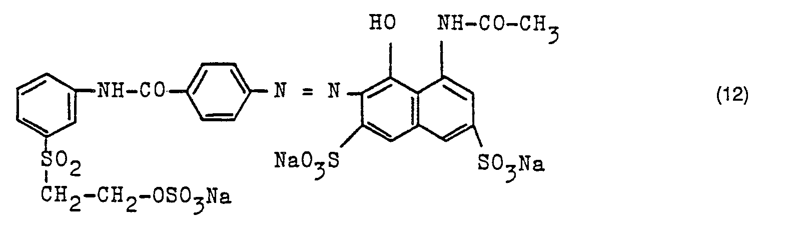 wird beispielsweise durch Kupplung von diazotiertem 4-Amino-benzoesäure-[3-(ß-sulfatoethylsulfonyl)-phenyl]-amid auf in wäßriger Lösung mit Acetanhydrid acetylierte 1-Amino-8-naphthol-3,6-disulfonsäure erhalten.

1 000 Teile einer wäßrigen Lösung mit 14,1 % dieses Farbstoffes, 2,19 % Natriumacetat, 4,5 % Natriumsulfat und 0,5 % Natriumchlorid werden unter langsamen Rühren auf - °C abgekühlt ; diese Temperatur wird noch 8 Stunden unter weiterem langsamem Rühren gehalten. Abgeschiedenes Natriumsulfat-dekahydrat (61 Teile) wird abfiltriert

Es wurden 939 Teile des Filtrats erhalten, das 15 % des Farbstoffes der Formel (12), 2,33 % Natriumacetat, 0,53 % Natriumchlorid und 1,9 % Natriumsulfat (Na₂S0₄) enthielt und einen pH-Wert von 4,6 besaß. Diese flüssige Präparation ist im geschlossenen Gefäß mindestens 6 Monate bei 5-20 °C und mindestens 6 Wochen bei 50 °C ohne Ausfällungen lagerstabil. Wegen des Gehaltes an Puffersubstanz (Natriumacetat) mit pH-stabilisierender Wirkung im Bereich zwischen 3 und 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 939 Teile des unter a) erfindungsgemäß erhaltenen Filtrats mit 99 Teilen Wasser versetzen, um auf diese Weise 1 038 Teile einer flüssigen Färbepräparation zu erhalten, die 13,6 % des Farbstoffes der Formel (12), 1,88 % Natriumacetat, 1,7 % Natriumsulfat (Na₂S0₄) und weniger als 0,5 % Natriumchlorid enthält und einen pH-Wert von 4,5 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, rote Färbungen und Drucke ergeben, die genauso farbstark waren wie diejenigen, die unter entsprechender Verwendung gleichkonzentrierter Färbebäder, Klotzflotten oder Druckpasten mit 1 Teil einer 54,4 % des Farbstoffes der Formel (12) enthaltenden Pulvereinstellung hergestellt wurden.

d) Stellt man dagegen die 1 000 Teile der oben unter a) eingesetzten Ausgangs-Farbstofflösung direkt mit 12 Teilen Natriumdihydrogenphosphat und 26 Teilen Wasser auf 13,6 % Farbstoff der Formel (12) ein, so treten bei dieser Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 9

a) 1 000 Teile einer wäßrigen Lösung des bekannten Farbstoffes der Formel (13) 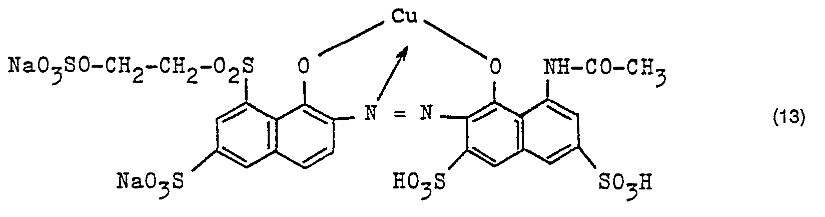 die beispielsweise 12,5 % dieses Farbstoffes, 2,1 % Natriumacetat, 5,6 % Natriumsulfat und 1,15 % Natriumchlorid enthält, wurde unter langsamen Rühren auf - 3 °C abgekühlt ; diese Temperatur wurde noch 6 Stunden unter langsamen Rühren gehalten. 107Teile Natriumsulfat-dekahydrat schieden sich ab, die abfiltriert wurden.

Es wurden 893 Teile des Filtrats erhalten, das 14 % des Farbstoffes der Formel (13), 1,3 % Natriumchlorid, 2,3 % Natriumacetat und 1 % Natriumsulfat (Na_{z}S0₄) enthielt und einen pH-Wert von 4,8 besaß. Diese flüssige Präparation ist im geschlossenen Gefäß mindestens 6 Monate bei 5-20 °C und mindestens 6 Wochen bei 50 °C ohne Ausfällungen lagerstabil. Wegen des Gehaltes an Puffersubstanz (Natriumacetat) mit pH-stabilisierender Wirkung im pH-Bereich zwischen 3 und 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 893 Teile des unter a) erfindungsgemäß erhaltenen Filtrats mit 140 Teilen Wasser versetzen, um auf diese Weise 1 033 Teile einer flüssigen Färbepräparation zu erhalten, die 12,1 % des Farbstoffes der Formel (13), 2,0 % Natriumacetat, 0,86 % Natriumsulfat (Na₂S0₄) und 1,12 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, blaue Färbungen und Drucke ergeben, die genauso farbstark waren wie diejenigen, die unter entsprechender Verwendung gleichkonzentrierter Färbebäder, Klotzflotten oder Druckpasten mit 1 Teil einer 48,4 % des Farbstoffes der Formel (13) enthaltenden Pulvereinstellung hergestellt wurden.

d) Stellt man dagegen die 1 000 Teile der oben unter a) eingesetzten Ausgangs-Farbstofflösung direkt mit 18 Teilen Natriumdihydrogenphosphat und 15 Teilen Wasser auf 12,1 % Farbstoff der Formel _{'}(13) ein, so treten bei dieser Präparation bei einer Lagerung bei 0°C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 10

a) 1 000 Teile einer wäßrigen Lösung des bekannten Fabstoffes der Formel (14) 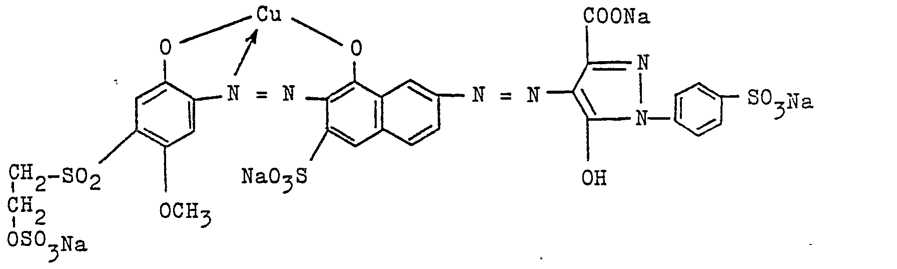 die beispielsweise 9,4 % dieses Farbstoffes, 11 % Natriumsulfat und 0,6 % Natriumchlorid enthielt, wurden unter langsamen Rühren auf ―2°C abgekühlt und 8 Stunden bei dieser Temperatur unter langsamen Rühren gehalten. Das abgeschiedene Natriumsulfat-dekahydrat (195 Teile) wurde abfiltriert.

Es wurden 805 Teile des Filtrats erhalten, das 11,67 % des Farbstoffes der Formel (14), 0,74% Natriumchlorid und 3,0 % Natriumsulfat (Na_{P}S0₄) enthielt und einen pH-Wert von 5,0 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 805 Teile des unter a) erfindungsgemäß erhaltenen Filtrats mit 19 Teilen Natriumdihydrogenphosphat und 116 Teilen Wasser versetzen, um auf diese Weise 940 Teile einer flüssigen Färbepräparation zu erhalten, die 10 % des Farbstoffes der Formel (14), 2,6 % Natriumsulfat (Na₂S0₄) und weniger als 0,9 % Natriumchlorid enthält und einen pH-Wert von 4,5 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, schwarze Färbungen und Drucke ergeben, die genauso farbstark waren wie diejenigen, die unter entsprechender Verwendung gleichkonzentrierter Färbebäder, Klotzflotten oder Druckpasten mit 1 Teil einer 40 % des Farbstoffes der Formel (14) enthaltenden Pulvereinstellung hergestellt wurden.

d) Stellt man dagegen die 1 000 Teile der oben unter a) eingesetzten Ausgangs-Farbstofflösung direkt mit 19 Teilen Natriumdihydrogenphosphat und durch Entfernen von 79 Teilen Wasser, z. B. durch Abdestillieren unter vermindertem Druck, auf 10 % Farbstoff der Formel (14) ein, so treten bei dieser Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 11

a) Aus einer wäßrigen Lösung des Farbstoffes der Formel (15) 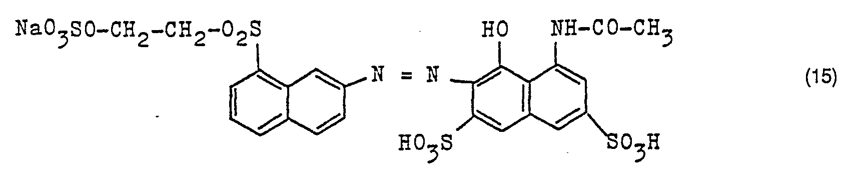 die in bekannter Verfahrensweise durch Kupplung von diazotiertem 8-(ß-Sulfatoethylsulfonyl)-2-aminonaphthalin auf in wäßriger Lösung mit Acetanhydrid acetylierte 1-Acetylamino-8-naphthol-3,6-disulfonsäure erhältlich ist, wird in erfindungsgemäßer Weise das Natriumsulfat zu wesentlichen Anteilen entfernt. Hierzu wurden 1 000 Teile einer wäßrigen Lösung mit 14,2 % dieses Farbstoffes, 2,7 % Natriumacetat, 8,9 % Natriumsulfat und 0,3 % Natriumchlorid unter gelegentlichem Rühren auf 0 °C abgekühlt ; die wäßrige Lösung wurde noch bei dieser Temperatur 8 Stunden unter gelegentlichem Rühren gehalten. Das abgeschiedene Natriumsulfat-dekahydrat (150 Teile) wurde abfiltriert.

Es wurden 850 Teile des Filtrats erhalten, das 16,7 % des Farbstoffes der Formel (15), 3,17 % Natriumacetat, 0,35 % Natriumchlorid und 2,7 % Natriumsulfat (Na₂S0₄) enthielt und einen pH-Wert von 4,4 besaß. Diese flüssige Präparation ist im geschlossenen Gefäß mindestens 6 Monate bei 5-20 °C und mindestens 6 Wochen bei 50 °C ohne Ausfällungen lagerstabil. Wegen des Gehaltes an Puffersubstanz (Natriumacetat) mit pH-stabilisierender Wirkung im pH-Bereich zwischen 3 und 7 treten zudem keine Farbstärkeverluste und auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine natriumsulfatärmere, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 840 Teile des unter a) erfindungsgemäß erhaltenen Filtrats mit 175 Teilen Wasser versetzen, um auf diese Weise 1 025 Teile einer flüssigen Färbepräparation zu erhalten, die 13,85 % des Farbstoffes der Formel (15), 2,63 % Natriumacetat, 2,2 % Natriumsulfat (Na₂S0₄) und weniger als 0,3 % Natriumchlorid enthält und einen pH-Wert von 4,3 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, rote Färbungen und Drucke ergeben, die genauso farbstark waren wie diejenigen, die unter entsprechender Verwendung gleichkonzentrierter Färbebäder, Klotzflotten oder Druckpasten mit 1 Teil einer 55,4 % des Farbstoffes der Formel (15) enthaltenden Pulvereinstellung hergestellt wurden.

d) Stellt man dagegen die 1000 Teile der oben unter a) eingesetzten Ausgangs-Farbstofflösung direkt mit 25 Teilen Wasser auf 13,85 % Farbstoff der Formel (15) ein, so treten bei dieser Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich eingestellten Farbstärkewert abweichen.

### Beispiel 12

a) 317 Teile einer wäßrigen Lösung des Farbstoffes der Formel (16) 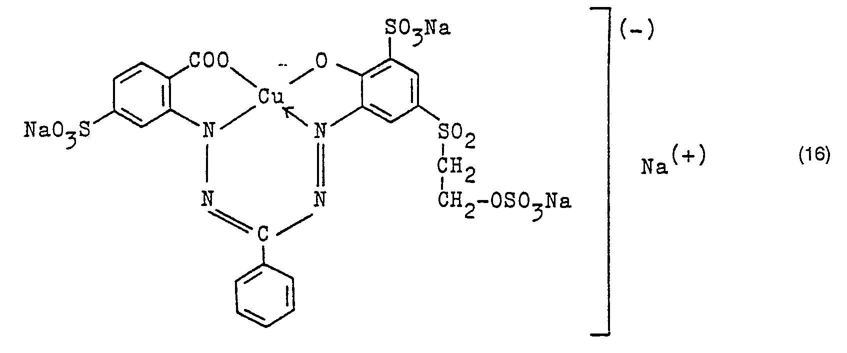 die in bekannter Verfahrensweise oder analog bekannter Verfahrensweise der Herstellung von Kupferformazan-Farbstoffen erhalten wurde und die 11,25 % Farbstoff der Formel (16), 0,66 % Natriumchlorid und 15,5 % Natriumsulfat (Na₂S0₄) enthielt, wurde unter gelegentlichem Rühren auf eine Temperatur von + 2 °C abgekühlt. Die Lösung wurde bei dieser Temperatur für längere Zeit gehalten, bis der Natriumsulfatgehalt der Lösung unter 5 % gesunken war. Das ausgefallene Glaubersalz, insgesamt 87 Teile Na₂SO₄ · 10H20, wurde abfiltriert. Es kann mit der anhaftenden Mutterlauge, d. h. ohne weiteres Waschen, einem anderen Ansatz mit diesem Farbstoff zugesetzt werden, der durch Trocknung, wie Sprühtrocknung, auf ein festes Farbstoffpulver verarbeitet wird.

Es wurden 230 Teile des Filtrats erhalten, das 15,5 % des Farbstoffes der Formel (16), 0,91 % Natriumchlorid und 4,9 % Natriumsulfat (Na₂S0₄) enthielt und einen pH-Wert von 4,9 besaß. Diese flüssige Präparation ist im geschlossenen Gefäß mindestens 6 Monate bei 5-20 °C und mindestens 6 Wochen bei 50 °C ohne Ausfällungen lagerstabil. Bei Zusatz einer Puffersubstanz zur Stabilisierung des pH-Bereiches zwischen 3 bis 7 treten zudem keine Farbstärkeverluste und deshalb auch keine Farbtonveränderungen bei Färbungen auf, die mit dieser Präparation nach unterschiedlicher Lagerungszeit hergestellt wurden. Eine Abkühlung der Präparation unter 0 °C führt wegen der bestehenden Sättigung an Natriumsulfat jedoch zur Auskristallisation von Glaubersalz.

b) Um diesbezüglich eine einwandfreie handelsfähige Präparation zu erhalten, kann man die erfindungsgemäß erhaltene Lösung mit Wasser (bspw. mit so viel Wasser, daß man eine in Bezug auf andere Handelsfarbstoffe standardisierte Lösung erhält) verdünnen, so daß man eine äußerst natriumsulfatarme, an Farbstoff jedoch noch ausreichend konzentrierte Flüssigpräparation erhält, die auch bei Temperaturen von 0 °C oder wenig darunter noch ausreichend lagerstabil ist und nicht zu Ausfällungen von Natriumsulfat-dekahydrat führt.

So kann man beispielsweise die 230 Teile des unter a) erfindungsgemäß erhaltenen Filtrats mit 6 Teilen Natriumdihydrogenphosphat und 164 Teilen Wasser versetzen, um auf diese Weise 400 Teile einer flüssigen Färbepräparation zu erhalten, die 8,9 % des Farbstoffes der Formel (16), 2,7 % Natriumsulfat (Na₂S0₄) und weniger als 0,5 % Natriumchlorid enthält und einen pH-Wert von 4,7 besitzt.

Diese Flüssigpräparation ist im geschlossenen Gefäß mindestens 6 Monate bei 20 °C und mindestens 6 Wochen bei 50 °C ohne Ausfällungen von Natriumsulfat oder Farbstoff und ohne Farbstärkeverluste und ohne Änderung des Farbtones der mit ihr erhältlichen Färbungen lagerstabil. Insbesondere ist diese flüssige Färbepräparation auch über längere Zeiten bei niedrigen Temperaturen, beispielsweise über 2 Wochen bei 0 °C, ohne Abscheidungen oder Ausfällungen lagerstabil.

c) Mit 4 Teilen der unter b) genannten pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, blaue Färbungen und Drucke ergeben, die genauso farbstark waren wie diejenigen, die unter entsprechender Verwendung gleichkonzentrierter Färbebäder, Klotzflotten oder Druckpasten mit 1 Teil einer 35,6 % des Farbstoffes der Formel (16) enthaltenden Pulvereinstellung hergestellt wurden.

d) Stellt man dagegen die 317 Teile der oben unter a) eingesetzten Ausgangs-Farbstofflösung direkt mit 6 Teilen Natriumdihydrogenphosphat und 77 Teilen Wasser auf 8,9 % Farbstoff der Formel (16) ein, so treten bei dieser Präparation bei einer Lagerung bei 0 °C bereits nach einem Tage starke Abscheidungen an Natriumsulfat-dekahydrat auf, und man erhält bei wiederholter Anwendung dieser Präparation Färbungen mit schwankenden Farbstärken, die von dem ursprünglich gewünschten Farbstärkewert abweichen.

### Beispiel 13

317 Teile der in Beispiel 12 a) genannten Ausgangs-Farbstofflösung wurden zur Abscheidung des Natriumsulfates auf -5 °C abgekühlt, und diese Temperatur wurde über längere Zeit gehalten, bis der Natriumsulfatgehalt unter 3 % gesunken war. Das ausgefallene Glaubersalz (105 Teile) wurde abfiltriert.

Das erhaltene Filtrat (212 Teile) kann nach Zusatz einer stabilisierenden Puffersubstanz, wie beispielsweise von 2 Teilen Natrium-dihydrogenphosphat, als lagerstabile flüssige Färbepräparation der weiteren färberischen Verwendung zugeführt werden. Diese pH-stabilisierte Präparation besitzt einen Farbstoffgehalt von 16,7 % und einen Gehalt an 1,3 % an Natriumsulfat (Na₂S0₄) und besitzt einen pH-Wert von 4,7. Sie ist im geschlossenen Gefäß mindestens 6 Monate bei 20 °C und mindestens 6 Wochen bei 50 °C ohne Ausfällungen und ohne Farbstärkeverluste und ohne Änderungen im Farbton der mit ihr erhältlichen Färbungen lagerstabil. Bei Temperaturen von 0 °C während 2 Wochen erfolgen keine Abscheidungen oder Ausfällungen, weder an Natriumsulfat-dekahydrat noch an Farbstoff. Sie kann, wie im Beispiel 12 beschrieben, für eine Standardisierung jedoch mit Wasser verdünnt werden, so daß auch Präparationen erhältlich sind, die unter - 5°C lagerstabil bleiben.

### Beispiel 14

280 Teile einer analog bekannten Verfahrensweisen hergestellten wäßrigen Lösung des Farbstoffes der Formel (16), die 12,7 % dieses Farbstoffes, 0,8 % Natriumchlorid und 14,9% Natriumsulfat enthielt, wurden unter gelengentlichem Rühren auf - 1 °C abgekühlt. Die Lösung wurde weiterhin bei dieser Temperatur über einige Stunden gehalten, bis der Gehalt an Natriumsulfat unter 3 % gesunken war. Sodann wurden die ausgefallenen 81 Teile Natriumsulfat-dekahydrat abfiltriert; sie wurden ohne Nachwaschen gemäß den Angaben des Beispieles 12 einem anderen Ansatz zur Herstellung eines Farbstoffpulvers des Farbstoffes der Formel (16) durch Sprühtrocknung zugeführt.

Die erhaltenen 199 Teile Filtrat besaßen einen Na₂S0₄-Gehalt von 3 % ; sie wurden mit 5 Teilen Natriumdihydrogenphosphat und 96 Teilen Wasser verdünnt. Die daraus resultierende Färbepräparation, die 11,9 % des Farbstoffes dar Formel (16), 2,0 % Natriumsulfat und etwa 0,7 % Natriumchlorid enthielt und einen pH-Wert von 4,5 besaß, kann als lagerstabile Färbepräparation direkt der färberischen Verwendung zugeführt werden. Sie ist im geschlossenen Gefäß mindestens 6 Monate bei 20 °C und mindestens 6 Wochen bei 50 °C ohne Ausfällungen, ohne Farbstärkeverluste und ohne Farbtonveränderung lagerstabil. Insbesondere kann sie auch über längere Zeiten bei niedrigen Temperaturen, beispielsweise über 2 Wochen bei 0 °C, ohne Abscheidungen oder Ausfällungen aufbewahrt werden.

Stellt man dagegen die 280 Teile Ausgangs-Farbstofflösung direkt mit 5 Teilen Natriumdihydrogenphosphat und 77 Teilen Wasser auf ebenfalls 11,9 % Farbstoff ein, so treten bei dieser Färbepräparation bei einer Lagerung bei 0 °C bereits nach 1 Tag starke Abscheidungen auf und man erhält Färbungen mit schwankenden, vom gewünschten Wert abweichenden Farbstärken.

### Beispiel 15

290 Teile einer analog bekannten Verfahrensweisen hergestellte Lösung des Farbstoffs der Formel (16), die 12,3 % dieses Farbstoffes, 0,4 % Natriumchlorid und 15,6 % Natriumsulfat enthielt, wurden unter gelegentlichem Rühren auf - 4 °C abgekühlt und bei dieser Temperatur für längere Zeit gehalten, bis der Natriumsulfatgehalt der Lösung unter 2 % gesunken war. Das ausgefallene Glaubersalz (96 Teile) wurde abfiltriert. Man erhält 194 Teile Filtrat mit einem Natriumsulfatgehalt von 1,55 %. Die Lösung kann bei einer Temperatur von 0 °C auch über mehrere Wochen ohne Ausfällung von Substanzen aufbewahrt werden. Vorteilhaft kann man sie mit bspw. 3 Teilen Natriumdihydrogenphosphat und 5 Teilen Wasser versetzen. Die daraus resultierende flüssige Färbepräparation mit 17,8 % an dem Farbstoff der Formel (16) und 1,5 % Natriumsulfat und einem pH-Wert von 4,7 ist im geschlossenen Gefäß mindestens 6 Monate bei 20 °C und mindestens 6 Wochen bei 60 °C ohne Ausfällungen, ohne Farbstärkeverluste und ohne Farbtonveränderung und insbesondere auch über längere Zeiten bei niedrigen Temperaturen, beispielsweise über 2 Wochen bei 0 °C, ohne Abscheidungen oder Ausfällungen lagerstabil. Sie eignet sich deshalb sehr gut als handelsfähige Flüssigpräparation zur Herstellung von Färbungen und Drucken.

Versucht man stattdessen, ausgehend von den 290 Teilen der genannten Ausgangs-Farbstofflösung, durch Zusatz von 3 Teilen Natriumdihydrogenphosphat und durch Entfernung der entsprechenden Menge Wasser, beispielsweise durch Vakuumdestillation, zu einer flüssigen Färbepräparation mit gleichem Farbstoffgehalt zu gelangen, so erhält man spätestens bei der Abkühlung auf Raumtemperatur (ca. 20 °C) einen nicht mehr fließfähigen Kristallbrei.

310 Teile einer analog bekannten Verfahrensweisen hergestellten Lösung des Farbstoffs der Formel (17) 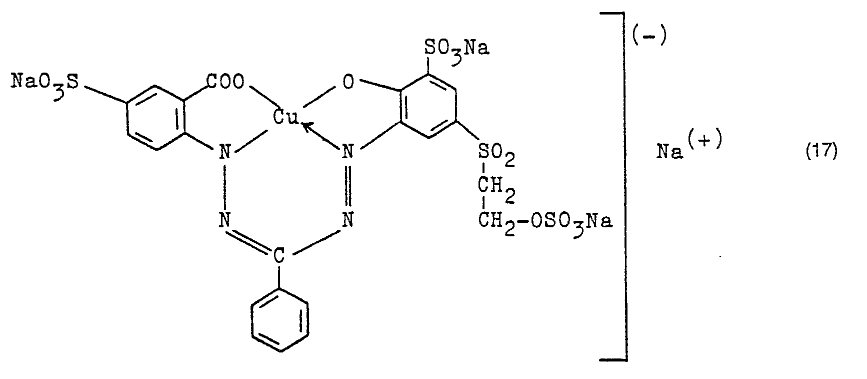 die 14,5 % des Farbstoffes, 0,8 % Natriumchlorid und 14,1 % Natriumsulfat enthielt, wurden unter gelegentlichem Rühren auf - 2 °C abgekühlt. Die Temperatur wurde für mehrere Stunden gehalten, bis der Natriumsulfatgehalt der Lösung unter 4 % gesunken war. Sodann wurden die ausgefallenen 79 Teile Na₂S0₄ . 10 H₂0 abfiltriert. Es wurden 231 Teile Filtrat mit einem Natriumsulfatgehalt von 3,9 % erhalten, die unter Zusatz von 4 Teilen Natriumdihydrogenphosphat mit 65 Teilen Wasser verdünnt werden können. Es resultieren daraus 300 Teile einer flüssigen Färbepräparation, die 15 % des Farbstoffes der Formel (17) und 3 % Natriumsulfat enthält und einen pH-Wert von 4,8 aufweist.

Diese flüssige Färbepräparation ist im geschlossenen Gefäß mindestens 6 Monate bei 20 °C und mindestens 6 Wochen bei 50 °C ohne Ausfällungen, ohne Farbstärkeverluste und ohne Farbtonveränderung, insbesondere auch über längere Zeiten bei niedrigen Temperaturen, beispielsweise über 2 Wochen bei 0 °C, ohne Abscheidungen oder Ausfällungen lagerstabil.

Stellt man dagegen eine gleich farbstarke flüssige Färbepräparation her, indem man nach Zusatz von 4 Teilen Natriumdihydrogenphosphat 141 Teile Wasser aus den 310 Teilen der obigen Ausgangs-Farbstofflösung, beispielsweise durch Vakuumdestillation, entfernt, so treten bei dieser Färbepräparation bei einer Lagerung bei 0 °C bereits nach 1 Tag starke Abscheidungen auf und man erhält Färbungen mit schwankenden, vom gewünschten Wert abweichenden Farbstärken.

## Patentansprüche

1. Verfahren zur Abtrennung von Natriumsulfat aus wäßrigen, natriumsulfathaltigen, weniger als 2 Gew.-% Chlorid enthaltenden Lösungen von anionischen oder kationischen Farbstoffen, insbesondere von wasserlöslichen Farbstoffen der allgemeinen Formel (1) 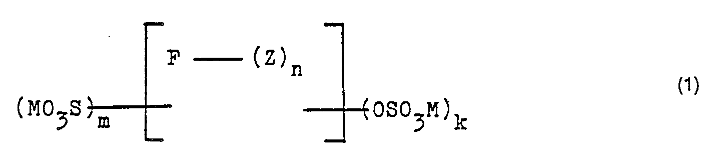 in welcher
F der Rest eines Farbstoffchromophors eines Anthrachinonfarbstoffes, eines Monoazofarbstoffes, eines Disazofarbstoffes, eines Triazofarbstoffes oder eines Phthalocyaninfarbstoffes oder eines Kupfer-, Chrom-, Kobalt-, Nickel- oder Eisen-Komplexfarbstoffes eines Mono-, Dis- oder Trisazofarbstoffes oder Phthalocyaninfarbstoffes oder eines Formazan-, Kupferformazan- oder Nickelformazanfarbstoffes ist;
M ein Wasserstoffatom oder bevorzugt ein Alkalimetall bedeutet,
k die Zahl Null, 1, 2, 3 oder 4 ist und
m für die Zahl Null, 1, 2, 3 oder 4 steht, wobei die Summe von (k + m) eine Zahl von mindestens 1 ist,
n die Zahl 1, 2 oder 3 darstellt,

Z ein faserreaktiver Monochlortriazinrest ist oder eine faserreaktive Gruppe der Formel (2b), (2c), (2d) oder (2e) 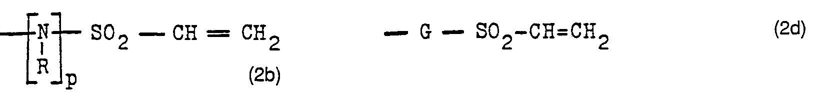 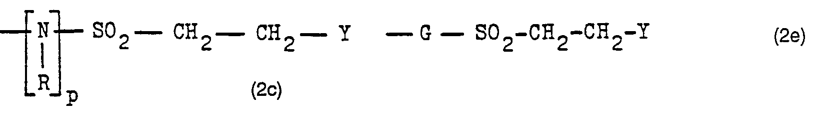 bedeutet, in welcher G eine Methylen- oder Ethylengruppe und R eine Alkylgruppe von 1 bis 4 C-Atomen ist, p für die Zahl Null oder 1 steht und Y die Acetyloxygruppe, eine Phosphato-, Thiosulfato- oder Sulfatogruppe oder ein Chlor- oder ein Bromatom bedeutet, und in welcher die faserreaktiven Gruppen Z, sofern sie gemäß, gleich 2 oder 3 zwei- oder dreimal an F gebunden sind, zueinander gleiche oder voneinander verschiedene Bedeutungen haben können und die angegebenen Sulfogruppen sowohl an aromatische und aliphatische C-Atome von F gebunden sein können als auch Bestandteil des faserreaktiven Monochlortriazinrestes sein können sowie die angegebenen Sulfatogruppen sowohl an aliphatische C-Atome von F gebunden sein als auch Bestandteil der faserreaktiven Gruppe der Formel (2c) oder (2e) und/oder des faserreaktiven Monochlortriazinrestes sein können, dadurch gekennzeichnet, daß man die Lösung auf eine Temperatur zwischen +5°C und ―15°C abkühlt und das abgeschiedene Natriumsulfat-dekahydrat abtrennt.

2. Verfahren nach Anspruch 1, dadurch gekennzeichnet, daß der Rest Z oder eines der Reste Z in Formel (1) ein Monochlortriazin-Rest der Formel (2a) 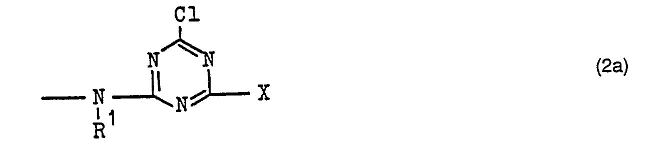 ist, in welcher
R¹ ein Wasserstoffatom oder eine Alkylgruppe von 1 bis 4 C-Atomen bedeutet,
X eine Gruppe der allgemeinen Formel (3a), (3b) oder (3c) 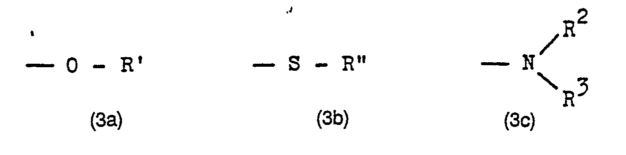 ist, in welchen
R' ein Wasserstoffatom oder eine Alkylgruppe von 1 bis 4 C-Atomen ist oder eine Alkylgruppe von 1 bis 4 C-Atomen bedeutet, die durch eine Alkoxygruppe von 1 bis 4 C-Atomen, eine Sulfo-, Carboxy-, Sulfato- oder Phosphatogruppe oder eine unsubstituierte oder eine durch 1 oder 2 Substituenten aus der Gruppe Methyl, Ethyl, Methoxy, Ethoxy, Chlor, Sulfo und Carboxy substituierte Phenylgruppe substituiert ist,
R" eine Alkylgruppe von 1 bis 4 C-Atomen ist oder eine Alkylgruppe von 1 bis 4 C-Atomen bedeutet, die durch eine Alkoxygruppe von 1 bis 4 C-Atomen, eine Sulfo-, Carboxy-, Sulfato- oder Phosphatogruppe oder eine unsubstituierte oder eine durch 1 oder 2 Substituenten aus der Gruppe Methyl, Ethyl, Methoxy, Ethoxy, Chlor, Sulfo und Carboxy substituierte Phenylgruppe substituiert ist,
R² ein Wasserstoffatom oder eine Alkylgruppe von 1 bis 4 C-Atomen ist, die durch einen oder zwei Substituenten aus der Gruppe Acetylamino, Hydroxy, Sulfato, ß-Sulfatoethylsulfonyl, β-Thiosulfatoethylsulfonyl, Alkoxy von 1 bis 4 C-Atomen, Sulfo, Carboxy, Phenyl, Naphthyl, durch Sulfo, Carboxy, β-Sulfatoethylsulfonyl, ß-Thiosulfatoethylsulfonyl, Methyl, Ethyl, Methoxy, Ethoxy, Chlor, Sulfamoyl und/oder Carbamoyl substituiertes Phenyl und durch Sulfo, Carboxy, β-Sulfatoethylsulfonyl, β-Thiosulfatoethylsulfonyl, Sulfamoyl und/oder Carbamoyl substituiertes Naphthyl substituiert sein kann, oder ist ein Cycloalkylrest von 5 bis 8 C-Atomen, der durch 1, 2 oder 3 Methylgruppen und/oder eine Amino- oder AlkylaminoGruppe mit einem Alkylrest von 1 bis 4 C-Atomen substituiert sein kann, bedeutet und
R³ ist ein Wasserstoffatom oder eine Alkylgruppe von 1 bis 4 C-Atomen, die durch einen oder zwei Substituenten aus der Gruppe Acetylamino, Hydroxy, Sulfato, β-Sulfatoethylsulfonyl, β-Thiosulfatoethylsulfonyl, Alkoxy von 1 bis 4 C-Atomen, Sulfo, Carboxy, Phenyl, Naphthyl, durch Sulfo, Carboxy, β-Sulfatoethylsulfonyl, β-Thiosulfatoethylsulfonyl, Methyl, Ethyl, Methoxy, Ethoxy, Chlor, Sulfamoyl und/oder Carbamoyl substituiertes Phenyl und durch Sulfo, Carboxy, ß-Sulfatoethylsulfonyl, ß-Thiosulfatoethylsulfonyl, Sulfamoyl und/oder Carbamoyl substituiertes Naphthyl substituiert sein kann, oder eine Phenyl- oder Naphthylgruppe oder eine Phenylgruppe, die durch 1 oder 2 Substituenten aus der Gruppe Acetylamino, Benzoylamino, Nitro, β-Sulfatoethylsulfonyl, β-Thiosulfatoethylsulfonyl, β-Chlorethylsulfonyl, Vinylsulfonyl, Alkoxy von 1 bis 4 C-Atomen, Sulfo, Carboxy, Sulfamoyl und Carbamoyl substituiert ist, oder eine Naphthylgruppe, die durch 1, 2 oder 3 Sulfogruppen oder durch 1 oder 2 Sulfogruppen und eine Vinylsulfonyl-, β-Sulfatoethylsulfonyl-, β-Thiosulfatoethylsulfonyl- oder β-Chlorethylsulfonyl-Gruppe substituiert ist, darstellt, wobei R² und R³ zueinander gleiche oder voneinander verschiedene Bedeutungen besitzen können, oder
R² und R³ zusammen mit dem Stickstoffatom und einem, zwei oder drei Alkylenresten von 1 bis 5 C-Atomen und gegebenenfalls einem oder zwei Heteroatomen, wie einem Sauerstoff-, Stickstoff- oder Schwefelatom, einen 5- bis 8-gliedrigen heterocyclischen Ring bilden.

3. Verfahren nach Anspruch 1, dadurch gekennzeichnet, daß der Rest Z oder einer der Reste Z in Formel (1) eine β-Sulfatoethylsulfonyl-Gruppe ist.

4. Verfahren nach Anspruch 1, dadurch gekennzeichnet, daß der Farbstoff der Formel (1) ein Farbstoff der Formel (5) 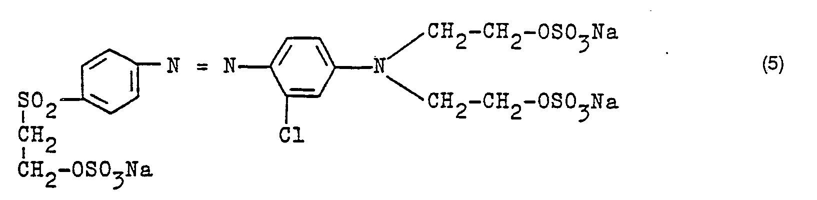 ist.

5. Verfahren nach Anspruch 1, dadurch gekennzeichnet, daß der Farbstoff der Formel (1) ein Farbstoff der Formel (6) 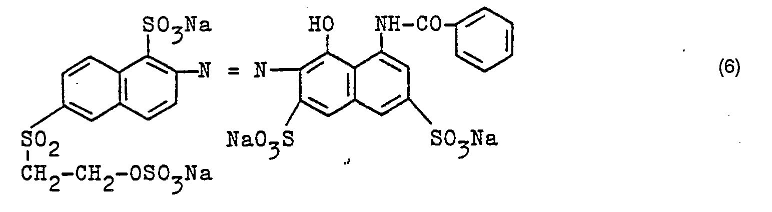 ist.

6. Verfahren nach Anspruch 1, dadurch gekennzeichnet, daß der Farbstoff der Formel (1) ein Farbstoff der Formel (7) 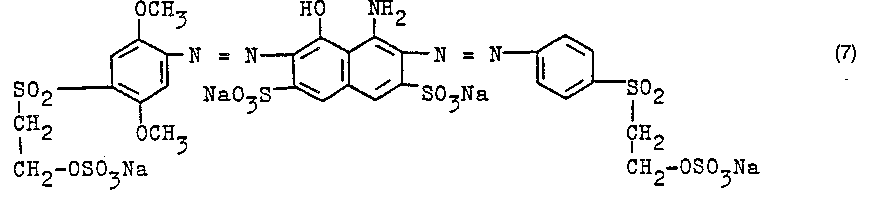 ist.

7. Verfahren nach Anspruch 1, dadurch gekennzeichnet, daß der Farbstoff der Formel (1) ein Farbstoff der Formel (8)

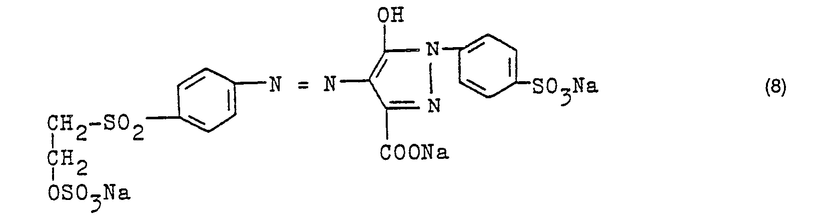

8. Verfahren nach Anspruch 1, dadurch gekennzeichnet, daß der Farbstoff der Formel (1) ein Farbstoff der Formel (9) 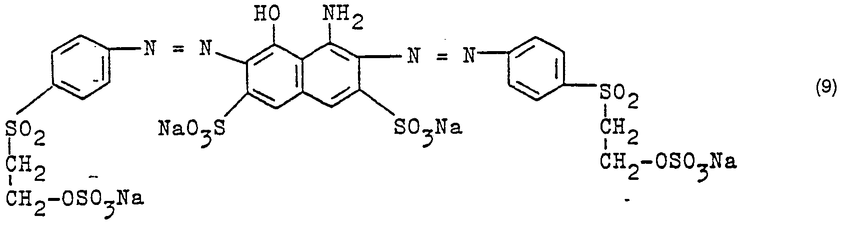 ist.

9. Verfahren nach Anspruch 1, dadurch gekennzeichnet, daß der Farbstoff der Formel (1) ein Gemisch der Farbstoffe der Formeln (10) und (11) 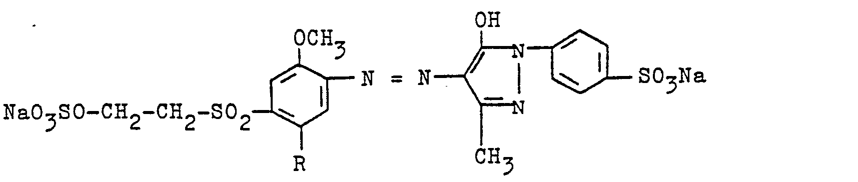
(10) : R ₌ Methyl
(11): R = Methoxy
ist.

10. Verfahren nach Anspruch 1, dadurch gekennzeichnet, daß der Farbstoff der Formel (1) ein Farbstoff der Formel (14) 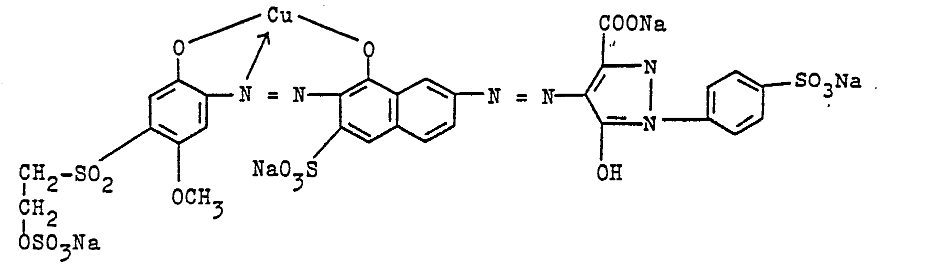 ist.

11. Verfahren nach Anspruch 1, dadurch gekennzeichnet, daß der Farbstoff der Formel (1) ein Farbstoff entsprechend der allgemeinen Formel (1g) 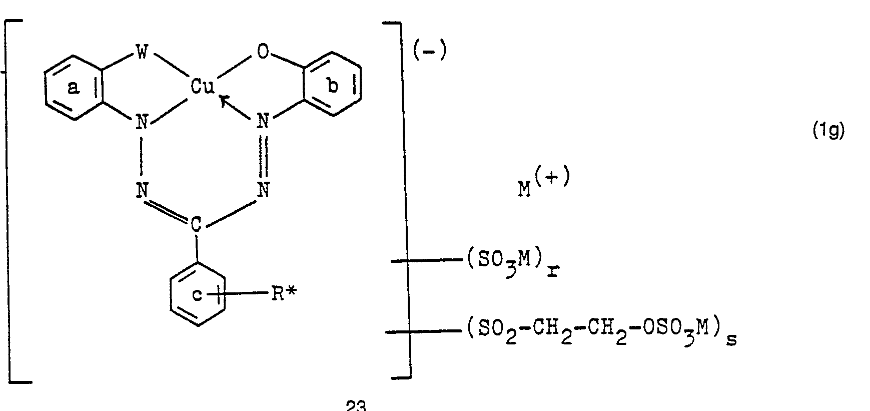 ist, in welcher
r die Zahl 1, 2 oder 3 bedeutet,
s für die Zahl 1 oder 2 steht,
M ein Alkalimetall, wie Natrium, Kalium oder Lithium, insbesondere Natrium, darstellt,
R^{*} für Wasserstoff, Chlor, Methyl, Ethyl, Methoxy, Ethoxy oder Carboxy steht,
W die Gruppe -0- oder -COO- bedeutet
und die Sulfogruppe(n) an die Benzolkerne a, b und/oder c und die β-Sulfatoethylsulfonyl-Gruppe(n) an die Benzolkerne a und/oder b gebunden sind.

12. Verfahren nach Anspruch 1, dadurch gekennzeichnet, daß der Farbstoff der Formel (1) ein Farbstoff entsprechend der allgemeinen Formel (1 h) 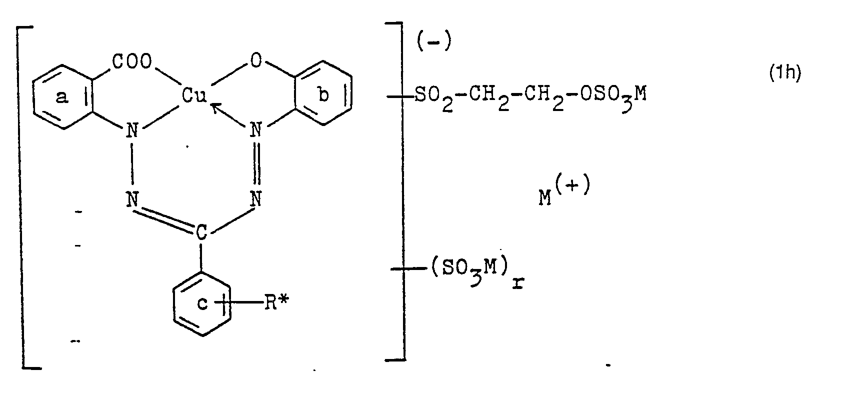 ist, in welcher M, r und R^{*} die in Anspruch 11 genannten Bedeutungen haben und die Sulfogruppe(n) an die Benzolkerne a, b und/oder c gebunden sind, wobei jeder dieser Benzolkerne nicht mehr als eine Sulfogruppe besitzt.

13. Verfahren nach Anspruch 1, dadurch gekennzeichnet, daß der Farbstoff der Formel (1) ein Farbstoff entsprechend der allgemeinen Formel (1j) 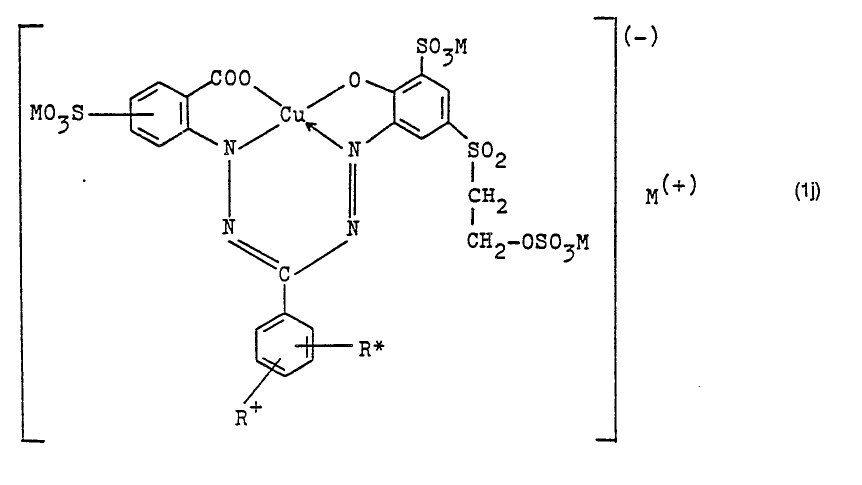 ist, in welcher M und R^{*} die in Anspruch 11 genannten Bedeutungen haben und R⁺ für ein Wasserstoffatom oder eine Sulfogruppe steht, R und R⁺ jedoch beide bevorzugt ein Wasserstoffatom bedeuten.

14. Verfahren nach Anspruch 1, dadurch gekennzeichnet, daß der Farbstoff der Formel (1) ein Farbstoff entsprechend der allgemeinen Formel (16) 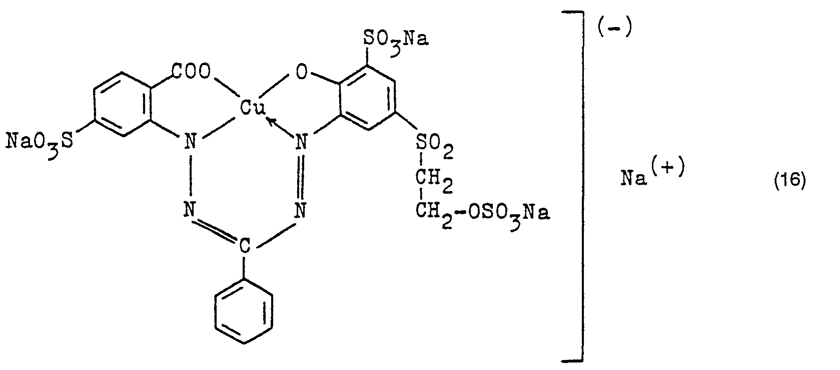 ist.

15. Die nach einem der Ansprüche 1 bis 14 erhältlichen Farbstofflösungen, gekennzeichnet durch den Gesamtgehalt von 5 bis 45 Gew.-% an einem oder mehrerer der Farbstoffe der allgemeinen Formel (1), an einem Gehalt von unter 5 Gew.-% an Na₂S0₄, an 2 Gew.-% oder weniger als 2 Gew.-% an Chloridionen, gegebenenfalls an bis zu 3 Gew.-% an Puffersubstanzen und durch einen pH-Wert zwischen 3 und 7.

16. Flüssige, wäßrige Färbepräparationen nach Anspruch 15, gekennzeichnet durch einen Gehalt an Na₂S0₄ von unter 4 Gew.-%.

17. Flüssige, wäßrige Färbepräparationen nach Anspruch 15, gekennzeichnet durch einen Gehalt an Chloridionen von unter 1 Gew.-%.

## Claims

1. A process for separating sodium sulfate from aqueous solutions, containing sodium sulfate and less than 2 % by weight of chloride, of anionic or cationic dyestuffs, in particular water-soluble dyestuffs of the general formula (1) 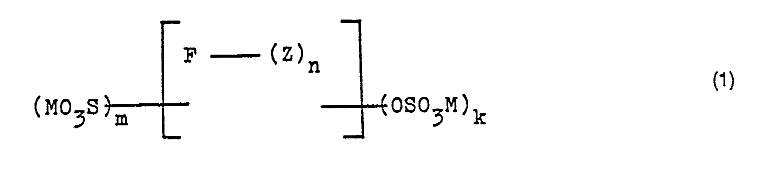 in which
F is the radical of a dyestuff chromophore of an anthraquinone dyestuff, of a monoazo dyestuff, of a disazo dyestuff, of a trisazo dyestuff or of a phthalocyanine dyestuff or of a copper, chromium, cobalt, nickel or iron complex dyestuff of a monoazo, disazo or trisazo dyestuff or phthalocyanine dyestuff, or of a formazan, copper-formazan or nickel-formazan dyestuff,
M is a hydrogen atom or preferably an alkali metal,
k is zero, 1, 2, 3 or 4 and
m is zero, 1, 2, 3 or 4
the sum of (k + m) being a number of at least 1,
n is 1, 2 or 3,
Z is a fiber-reactive monochlorotriazine radical or a fiber-reactive group of the formula (2b), (2c), (2d) or (2e) 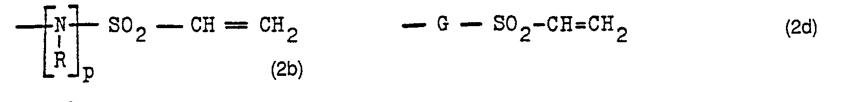 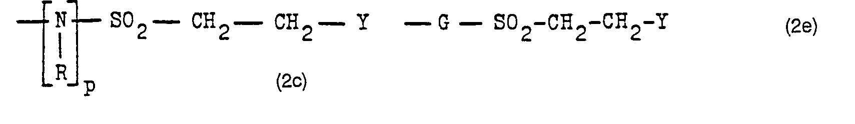 in which G is a methylene or ethylene group and R is an alkyl group of 1 to 4 carbon atoms, p stands for the number zero or 1 and Y is an acetyloxy group, a phosphato group, a thiosulfato group or a sulfato group or a chlorine or bromine atom, and in which the fiber-reactive groups Z, insofar as in accordance with n being equal to 2 or 3 they are bonded to F twice of three times, can have meanings which are identical to or different from one another, the indicated sulfo groups cannot only be bonded to aromatic and aliphatic carbon atoms of F but can also be part of the fiber-reactive monochlorotriazine radical, the indicated sulfato groups cannot only be bonded to aliphatic carbon atoms of F but can also be part of the fiber-reactive group of the formula (2c) or (2e) and/or the fiber-reactive monochlorotriazine radical, which comprises cooling down the solution to a temperature between + 5 °C and -15 °C and separating off the precipitated sodium sulfate decahydrate.

2. The process as claimed in claim 1 wherein the radical Z or one of the radicals Z of formula (1) is a monochlorotriazine radical of the formula (2a) 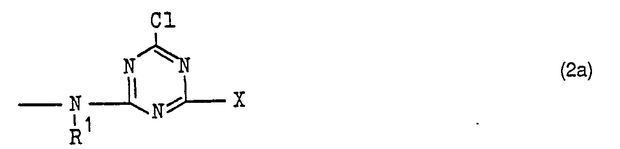 in which
R¹ is a hydrogen atom or an alkyl group of 1 to 4 carbon atoms,
X is a group of the general formula (3a), (3b) or (3c) 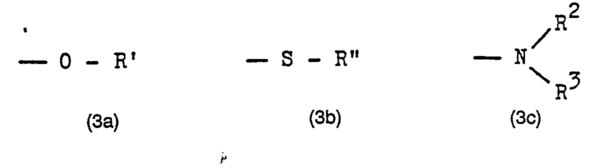 in which
R' is a hydrogen atom or an alkyl group of 1 to 4 carbon atoms or denotes an alkyl group of 1 to 4 carbon atoms which is substituted by an alkoxy group of 1 to 4 carbon atoms, by a sulfo, carboxyl, sulfato or phosphato group or by a phenyl group which is unsubstituted or substituted by 1 or 2 substituents from the group consisting of methyl, ethyl, methoxy, ethoxy, chlorine, sulfo and carboxyl,
R" is an alkyl group of 1 to 4 carbon atoms or denotes an alkyl group of 1 to 4 carbon atoms which is substituted by an alkoxy group of 1 to 4 carbon atoms, by a sulfo, carboxyl, sulfato or phosphato group or by a phenyl group which is unsubstituted or substituted by 1 or 2 substituents from the group consisting of methyl, ethyl, methoxy, ethoxy, chlorine, sulfo and carboxyl,
R² is a hydrogen atom or an alkyl group of 1 to 4 carbon atoms which can be substituted by one or two substituents from the group consisting of acetylamino, hydroxyl, sulfato, β-sulfatoethylsulfonyl, β-thiosulfatoethylsulfonyl, alkoxy of 1 to 4 carbon atoms, sulfo, carboxyl, phenyl, naphthyl, phenyl which is substituted by sulfo, carboxyl, β-sulfatoethylsulfonyl, l3-thiosulfatoethylsulfonyl, methyl, ethyl, methoxy, ethoxy, chlorine, sulfamoyl and/or carbamoyl, and naphthyl which is substituted by sulfo, carboxyl, β-sulfatoethylsulfonyl, β-thiosulfatoethylsulfonyl, sulfamoyl and/or carbamoyl, or is a cycloalkyl radical of 5 to 8 carbon atoms which can be substituted by 1, 2 or 3 methyl groups and/or by an amino or alkylamino group having an alkyl radical of 1 to 4 carbon atoms, and
R³ is a hydrogen atom or an alkyl group of 1 to 4 carbon atoms which can be substituted by one or two substituents from the group consisting of acetylamino, hydroxyl, sulfato, β-sulfatoethylsulfonyl, β-thiosulfatoethylsulfonyl, alkoxy of 1 to 4 carbons, sulfo, carboxyl, phenyl, naphthyl, phenyl which is substituted by sulfo, carboxyl, β-sulfatoethylsulfonyl, p-thiosulfatoethylsulfonyl, methyl, ethyl, methoxy, ethoxy, chlorine, sulfamoyl and/or carbamoyl, and naphthyl which is substituted by sulfo, carboxyl, β-sulfatoethylsulfonyl, β-thiosulfatoethylsulfonyl, sulfamoyl and/or carbamoyl, or is a phenyl or naphthyl group or denotes a phenyl group which is substituted by 1 or 2 substituents from the group consisting of acetylamino, benzoylamino, nitro, β-sulfatoethylsulfonyl, β-thiosulfatoethylsulfonyl, β-chloroethylsulfonyl, vinylsulfonyl, alkoxy of 1 to 4 carbon atoms, sulfo, carboxyl, sulfamoyl and carbamoyl, or is a naphthyl group which is substituted by 1, 2 or 3 sulfo groups or by 1 or 2 sulfo groups and a vinylsulfonyl, β-sulfatoethylsulfonyl. β-thiosulfatoethylsulfonyl or a-chloroethylsulfonyl group, where
R² and R³ can possess meanings which are identical to or different from each other, or in which R² and
R³, together with the nitrogen atom and one, two or three alkylene radicals of 1 to 5 carbon atoms and, optionally, one or two heteroatoms, such as an oxygen, nitrogen or sulfur atom, form a 5- to 8- membered heterocyclic ring.

3. The process as claimed in claim 1 wherein the radical Z or one of the radicals Z in the formula (1) is a α-sulfatoethylsulfonyl group.

4. The process as claimed in claim 1 wherein the dyestuff of the formula (1) is a dyestuff of the formula (5)

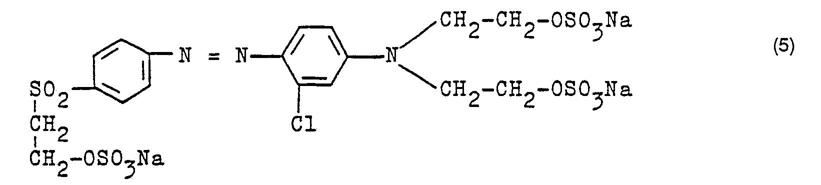

5. The process as claimed in claim 1 wherein the dyestuff of the formula (1) is a dyestuff of the formula (6)

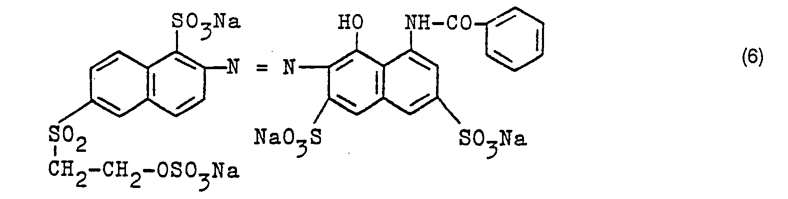

6. The process as claimed in claim 1 wherein the dyestuff of the formula (1) is a dyestuff of the formula (7)

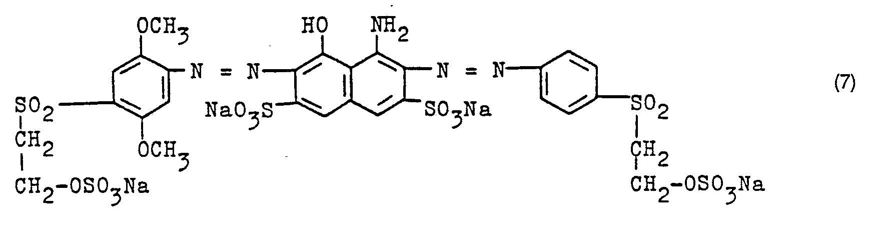

7. The process as claimed in claim 1 wherein the dyestuff of the formula (1) is a dyestuff of the formula (8).

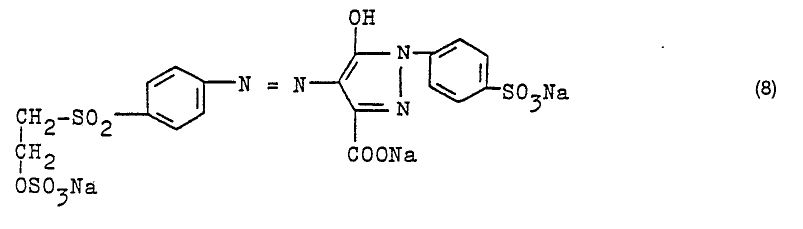

8. The process as claimed in claim 1 wherein the dyestuff of the formula (1) is a dyestuff of the formula (9)

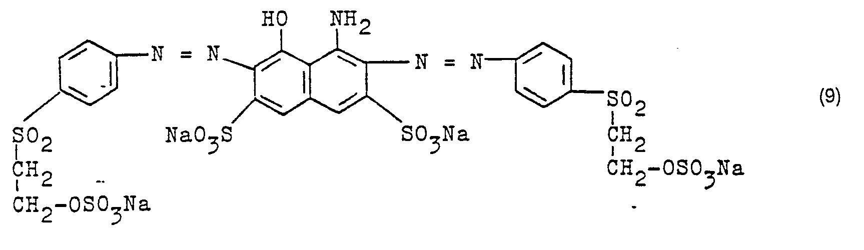

9. The process as claimed in claim 1 wherein the dyestuff of the formula (1) is a mixture of the dyestuffs of the formulae (10) and (11) 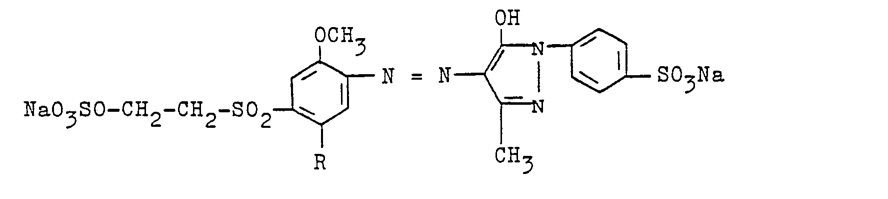 (10) : R = methyl (11) : R = methoxy

10. The process as claimed in claim 1 wherein the dyestuff of the formula (1) is a dyestuff of the formula (14)

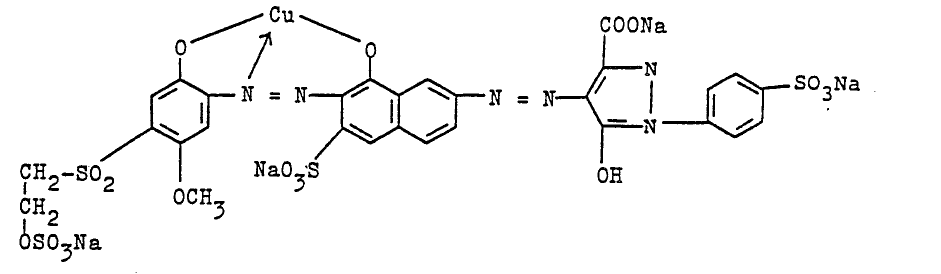

11. The process as claimed in claim 1 wherein the dyestuff of the formula (1) is a dyestuff conforming to the general formula (1g) 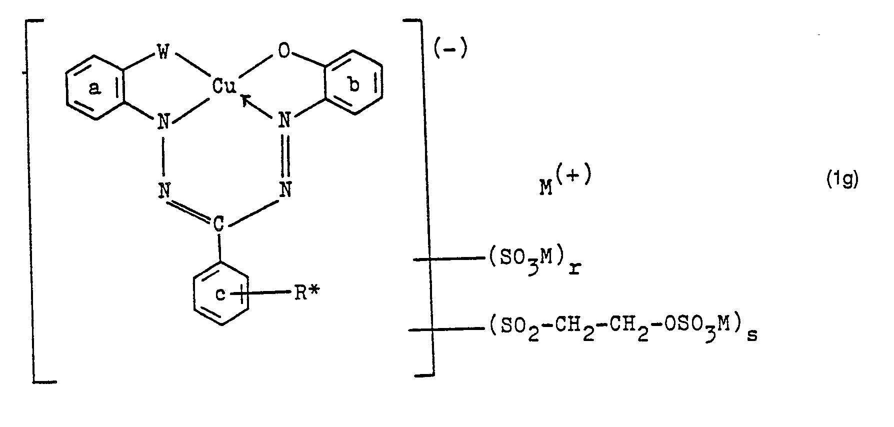 in which
r denotes the number 1, 2 or 3,
s denotes the number 1 or 2,
M represents an alkali metal, such as sodium, potassium or lithium, in particular sodium,
R^{*} stands for hydrogen, chlorine, methyl, ethyl, methoxy, ethoxy or carboxyl,
W denotes a -O- or -COO- group and
the sulfo group(s) is or are bonded to the benzene nuclei a, b and/or c and the β-sulfatoethylsulfonyl group(s) is or are bonded to the benzene nuclei a and/or b.

12. The process as claimed in claim 1 wherein the dyestuff of the formula (1) is a dyestuff conforming to the general formula (1 h) 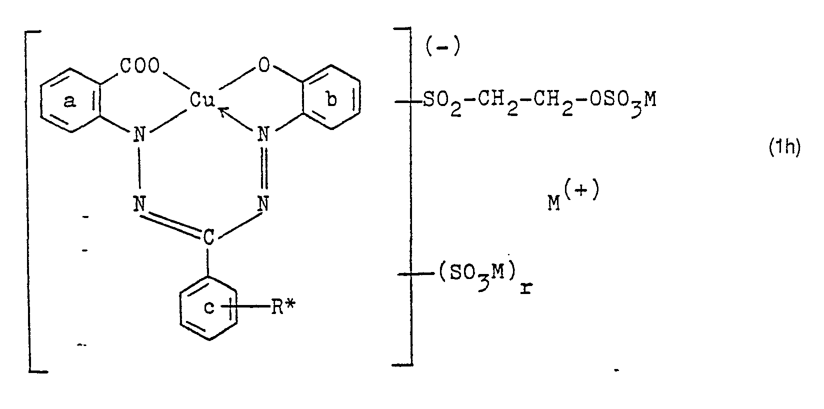 in which M, r and R^{*} have the meanings mentioned in claim 11 and the sulfo group(s) is or are bonded to the benzene nuclei a, b and/or c, all of these benzene nuclei not having more than one sulfo group each.

13. The process as claimed in claim 1 wherein the dyestuff of the formula (1) is a dyestuff conforming to the general formula (1j) 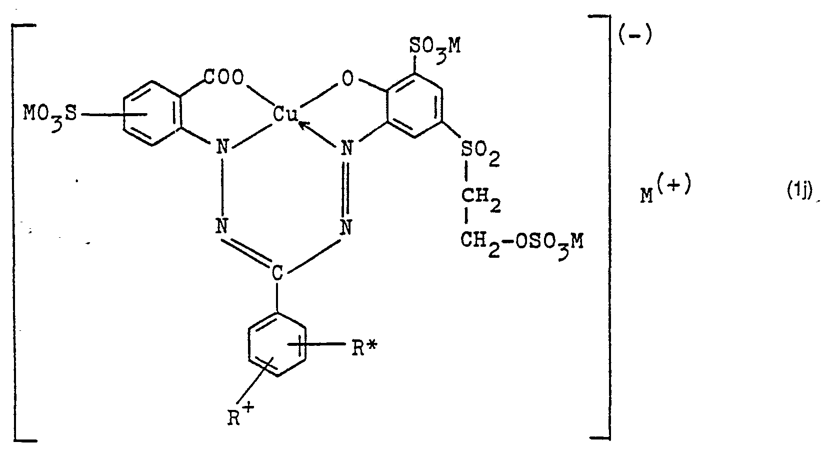 in which M and R^{*} have the meanings mentioned in claim 11 and R⁺ stands for a hydrogen atom or a sulfo group, R and R⁺ however both preferably denoting a hydrogen atom.

14. The process as claimed in claim 1 wherein the dyestuff of the formula (1) is a dyestuff conforming to the general formula (16)

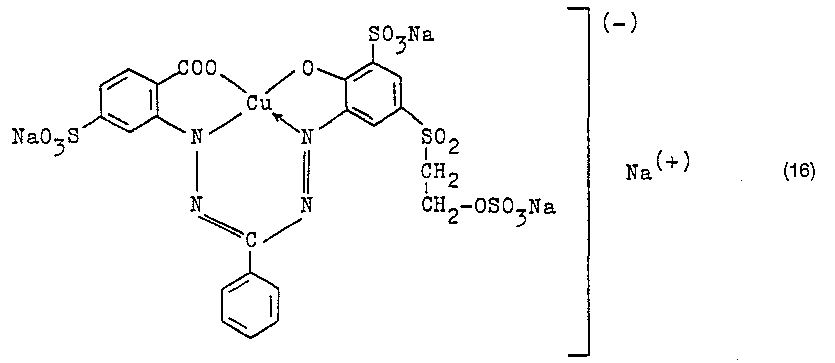

15. A dyestuff solution obtainable by any one of claims 1 to 14 which contains in total 5 to 45 % of one or more of the dyestuffs of the general formula (1), less than 5 % by weight of Na₂SO₄, 2 % by weight or less than 2 % by weight of chloride ions, and zero or up to 3 % by weight of buffer substances, and has a pH between 3 and 7.

16. A liquid aqueous dyeing preparation as claimed in claim 15 which contains less'than 4 % by weight of NapS0₄.

17. A liquid aqueous dyeing preparation as claimed in claim 15 which contains less than 1 % by weight of chloride ions.

## Revendications

1. Procédé pour séparer le sulfate de sodium de solutions aqueuses (contenant du sulfate de sodium et contenant moins de 2 % de chlorure) de colorants anioniques ou cationiques, en particulier de colorants hydrosolubles répondant à la formule générale (1) : 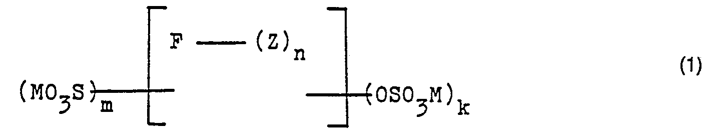 dans laquelle
F représente le reste d'un chromophore d'un colorant anthraquinonique, d'un colorant monoazoïque, d'un colorant diazoïque, d'un colorant trisazoïque ou d'un colorant de la série de la phtalocyanine, ou d'un colorant complexe de cuivre, de chrome, de cobalt, de nickel ou de fer d'un colorant monoazoïque, disazoïque ou trisazoïque ou d'un colorant de la série de la phtalocyanine, ou d'un colorant de série de formazane, de cuivre-formazane ou de nickel-formazane ;
M représente un atome d'hydrogène ou de préférence un métal alcalin ;
k est un nombre nul ou valant 1, 2, 3 ou 4 ; et
m est un nombre nul ou valant 1, 2, 3 ou 4, la somme de (k + m) étant un nombre valant au moins 1,
n est un nombre valant 1, 2 ou 3,
Z représente un reste monochlorotriazine pouvant réagir avec les fibres, ou un groupe, pouvant réagir avec les fibres et répondant à la formule (2b), (2c), (2d) ou (2e) : 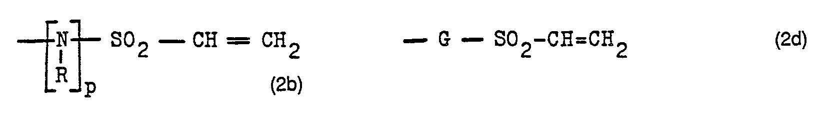 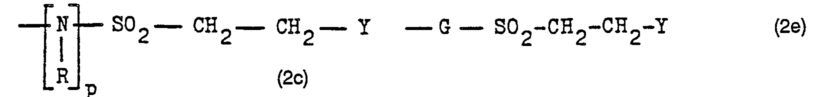 où G représente un groupe méthylène ou éthylène et R un groupe alkyle ayant 1 à 4 atomes de carbone, p est un nombre nul ou valant 1 et Y représente le groupe acétyloxy, un groupe phosphato, thiophosphato ou sulfato, ou un atome de chlore ou un atome de brome, et les groupes Z pouvant réagir avec les fibres peuvent avoir des sens identiques ou différents, dans la mesure où, n valant 2 ou 3, ils sont fixés deux ou trois fois sur F, et les groupes sulfo pouvant être fixés sur des atomes de C aromatiques aussi bien qu'aliphatiques de F et pouvant aussi faire partie du reste monochlorotriazine pouvant réagir avec les fibres et les groupes sulfato indiqués pouvant être fixés sur des atomes de C aliphatiques de F ou faire également partie des groupes, pouvant réagir avec les fibres et répondant aux formules (2c) ou (2e) et/ou faire partie du reste monochlorotriazine pouvant réagir avec les fibres, procédé caractérisé en ce qu'on refroidit la solution jusqu'à une température comprise entre + 5 °C et - 15°C et l'on sépare le sulfate de sodium décahydraté précipité.

2. Procédé selon la revendication 1, caractérisé en ce que le reste Z ou l'un des restes Z de la formule (1) est un reste monochlorotriazine de formule (2a) : 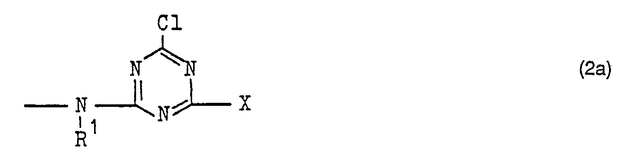 dans laquelle
R' représente un atome d'hydrogène ou un groupe alkyle ayant 1 à 4 atomes de carbone,
X représente un groupe de formules générales (3a), (3b) ou (3c) : 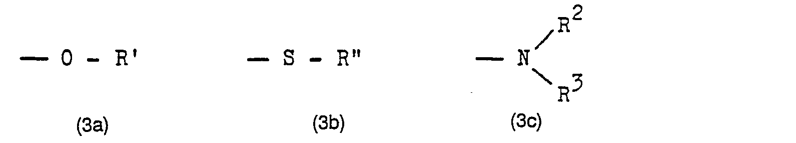 dans lesquelles :
R' représente un atome d'hydrogène ou un groupe alkyle ayant 1 à 4 atomes de carbone ou bien représente un groupe alkyle ayant 1 à 4 atomes de carbone et qui est substitué par un groupe alcoxy ayant 1 à 4 atomes de carbone, par un groupe sulfo, carboxyle, sulfato ou phosphato ou par un groupe phényle non substitué ou par un groupe phényle substitué par un ou deux substituants choisis parmi un groupe méthyle, éthyle, méthoxy, éthoxy, chloro, sulfo et carboxy,
R" représente un groupe alkyle ayant 1 à 4 atomes de carbone ou un groupe alkyle ayant 1 à 4 atomes de carbone et qui est substitué par un groupe alcoxy ayant 1 à 4 atomes de carbone, par un groupe sulfo, carboxy, sulfato ou phosphato ou par un groupe phényle, non substitué ou lui-même substitué par un ou deux substituants choisis parmi un groupe méthyle, éthyle, méthoxy, éthoxy, chloro, sulfo et carboxyle,
R² représente un atome d'hydrogène ou un groupe alkyle ayant 1 à 4 atomes de carbone, qui peut être substitué par un ou deux substituants choisis parmi un groupe acétylamino, hydroxyle, sulfato, bêta-sulfatoéthylsulfonyle, bêta-thiosulfatoéthylsulfonyle, alcoxy ayant 1 à 4 atomes de carbone, sulfo, carboxy, phényle, naphtyle, par un groupe phényle (substitué par un groupe sulfo, carboxyle, bêta-sulfatoéthylsulfonyle, bêta-sulfatoéthylsulfonyle, méthyle, éthyle, méthoxy, éthoxy, chloro, sulfamoyle et/ou carbamoyle) et par un groupe naphtyle (substitué par un groupe sulfo, carboxyle, bêta-sulfatoéthylsulfonyle, bêta-thiosulfatoéthylsulfonyle, sulfamoyle et/ou carbamoyle), ou bien R² représente un reste cycloalkyle ayant 5 à 8 atomes de carbone, qui peut être substitué par un, deux ou trois groupes méthyles et/ou par un groupe amino ou alkylamino comportant 1 à 4 atomes de carbone dans le reste alkyle, et
R³ représente un atome d'hydrogène ou un groupe alkyle ayant 1 à 4 atomes de carbone, qui peut être substitué par un ou deux substituants choisis parmi un groupe acétylamino, hydroxyle, sulfato, bêta-sulfatoéthylsulfonyle, bêta-thiosulfatoéthylsulfonyle, alcoxy ayant 1 à 4 atomes de carbone, sulfo, carboxyle, phényle, naphtyle, phényle (substitué par un groupe sulfo, carboxy, bêta-sulfatoéthylsulfonyle, bêta-thiosulfatoéthylsulfonyle, méthyle, éthyle, méthoxy, éthoxy, chloro, sulfamoyle et/ou carbamoyle) et par un groupe naphtyle (substitué par un groupe sulfo, carboxy, bêta-sulfatoéthylsulfonyle, bêta-thiosulfatoéthylsulfonyle, sulfamoyle et/ou carbamoyle), ou un groupe phényle ou naphtyle ou un groupe phényle (qui est substitué par un ou deux substituants choisis parmi un groupe acétylamino, benzoylamino, nitro, bêta-sulfatoéthylsulfonyle, bêta-thiosulfatoéthylsulfonyle, bêta-chloréthylsulfonyle, vinylsulfonyle, alcoxy ayant 1 à 4 atomes de cartone, sulfo, carboxy, sulfamoyle et carbamoyle) ou un groupe naphtyle, qui est substitué par un, deux ou trois groupes sulfo ou par un ou deux groupes sulfo et par un groupe vinylsulfonyle, bêta-sulfatoéthylsulfonyle, bêta-thiosulfatoéthylsulfonyle ou bêta-chloréthylsulfonyle,
R² et R³ pouvant présenter des sens identiques ou différents l'un de l'autre, ou bien
R² et R³ forment, avec l'atome d'azote et avec un, deux ou trois restes alkylènes ayant à 5 atomes de carbone et éventuellement un ou deux hétéro-atomes, comme un atome d'oxygène, d'azote ou de soufre, un noyau hétérocyclique pentagonal à octagonal.

3. Procédé selon la revendication 1, caractérisé en ce que le reste Z ou l'un des restes Z de la formule (1) est un groupe bêta-sulfatoéthylsulfonyle.

4. Procédé selon la revendication 1, caractérisé en ce que le colorant de formule (1) est un colorant de formule (5) :

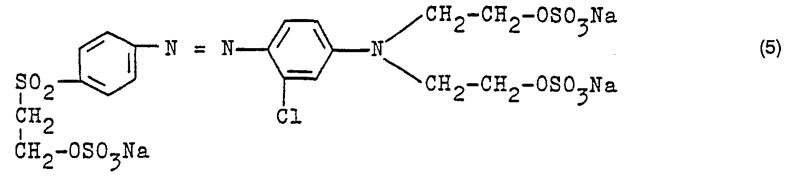

5. Procédé selon la revendication 1, caractérisé en ce que le colorant de formule (1) est un colorant de formule (6) :

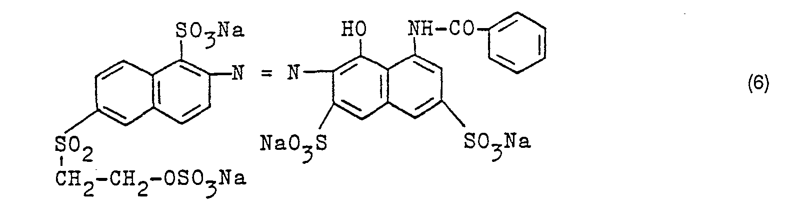

6. Procédé selon la revendication 1, caractérisé en ce que le colorant de formule (1) est un colorant de formule (7) :

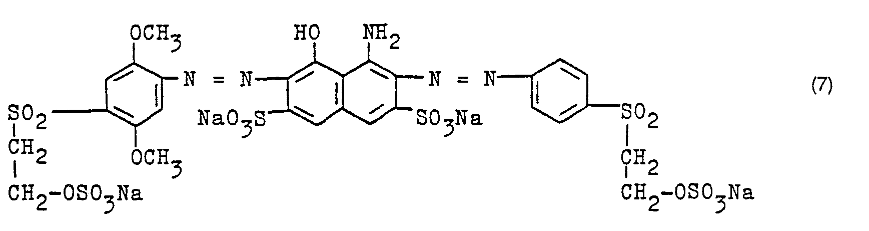

7. Procédé selon la revendication 1, caractérisé en ce que le colorant de formule (1) est un colorant de formule (8) :

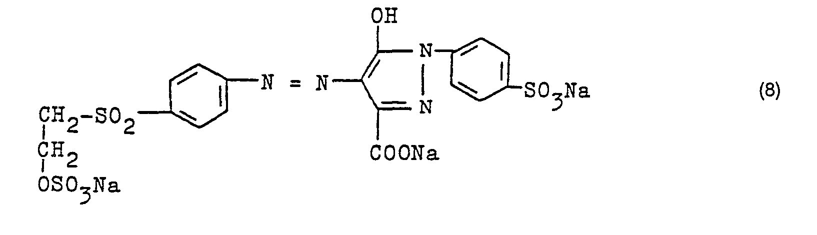

8. Procédé selon la revendication 1, caractérisé en ce que le colorant de formule (1) est un colorant de formule (9) :

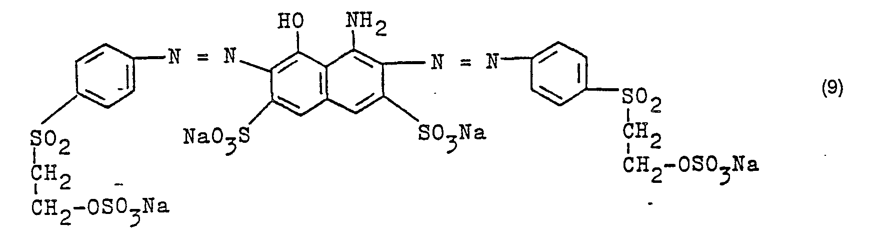

9. Procédé selon la revendication 1, caractérisé en ce que le colorant de formule (1) est un mélange des colorants répondant aux formules (10) et (11) : 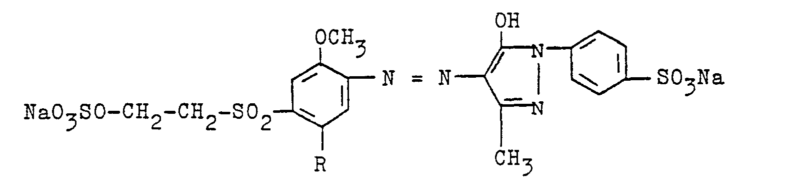
(10) : R=Méthyle
(11) : R=Méthoxy

10. Procédé selon la revendication 1, caractérisé en ce que le colorant de formule (1) est un colorant de formule (14) :

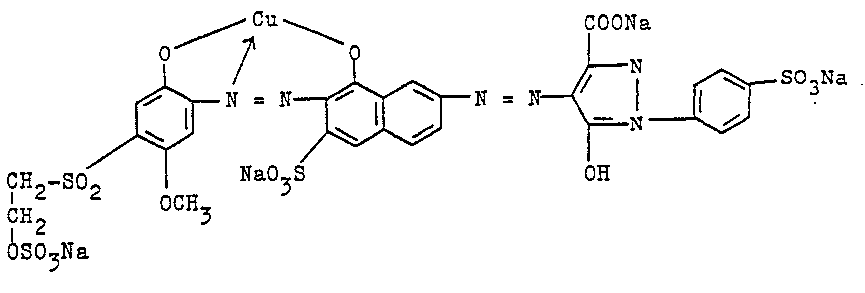

11. Procédé selon la revendication 1, caractérisé en ce que le colorant de formule (1) est un colorant répondant à la formule générale (1g) : 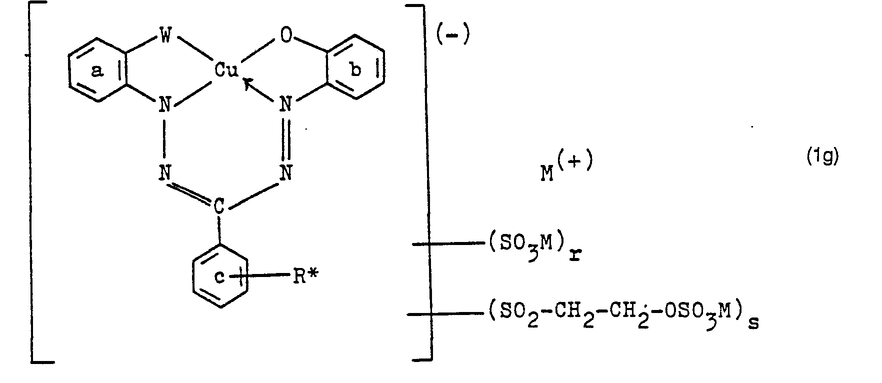 dans laquelle
r est un nombre valant 1, 2 ou 3,
s est un nombre valant 1 ou 2,
M représente un métal alcalin, tel que le sodium, le potassium ou le lithium, en particulier le sodium,
R^{*} représente un atome d'hydrogène ou de chlore ou un groupe méthyle, éthyle, méthoxy, éthoxy ou carboxyle,
W représente le groupe -0- ou -COO-,
et le ou les groupes sulfo est ou sont fixés sur les noyaux benzéniques a, b et/ou c et le ou les groupes bêta-sulfatoéthylsulfonyle est ou sont fixés sur les noyaux benzéniques a et/ou b.

12. Procédé selon la revendication 1, caractérisé en ce que le colorant de formule (1) est un colorant répondant à la formule générale (1 h) : 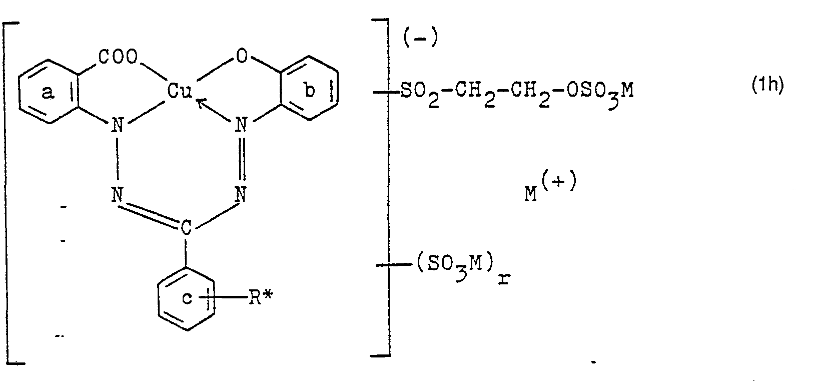 dans laquelle M, r et R^{*} ont le sens indiqué à la revendication 11, et le ou les groupes sulfo est ou sont fixés sur les noyaux benzéniques a, b et/ou c, chacun de ces noyaux benzéniques ne contenant pas plus d'un groupe sulfo.

13. Procédé selon la revendication 1, caractérisé en ce que le colorant de formule (1) est un colorant répondant à la formule générale (1j) : 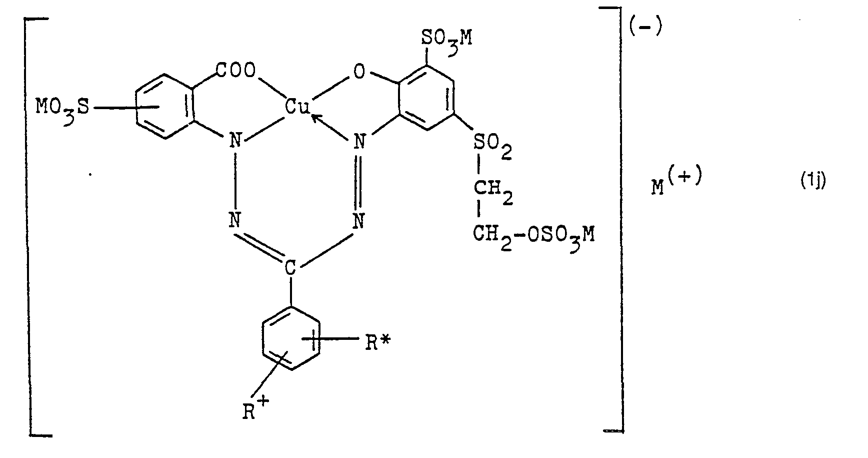 dans laquelle M et R^{*} ont les sens indiqués à la revendication 11, et R⁺ représente un atome d'hydrogène ou un groupe sulfo, R et R⁺ représentant cependant chacun, de préférence, un atome d'hydrogène.

14. Procédé selon la revendication 1, caractérisé en ce que le colorant de formule (1) est un colorant répondant à la formule générale (16) :

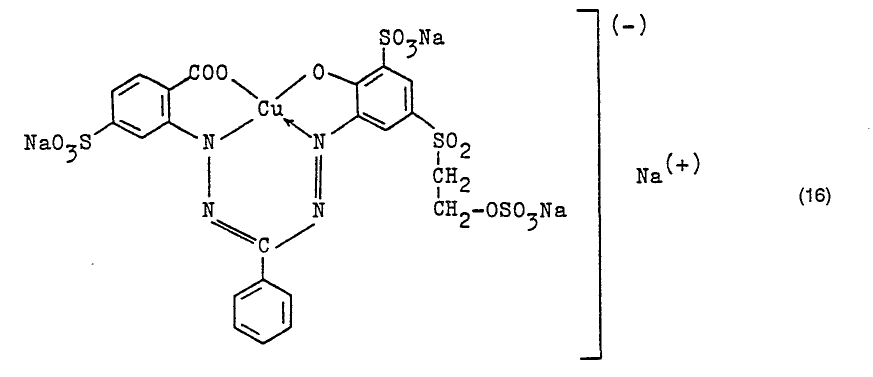

15. Solutions tinctoriales, que l'on peut obtenir selon l'une quelconque des revendications 1 à 14, caractérisées par une teneur totale de 5 à 45 % en poids en un ou plusieurs des colorants de formule générale (1), par une teneur inférieure à 5 % en poids en Na₂S0₄, par une teneur de 2 % en poids ou inférieure à 2 % en poids en des ions chlorures, éventuellement en une teneur pouvant aller jusqu'à 3% en poids en des substances tampons et par un pH compris entre 3 et 7.

16. Préparations tinctoriales aqueuses liquides selon la revendication 15, caractérisées en ce que leur teneur en Na₂S0₄ est inférieure à 4% en poids.

17. Préparations tinctoriales aqueuses liquides selon la revendication 15, caractérisées en ce que leur teneur en des ions chlorures est inférieure à 1 % en poids.
